# EUROPEAN PATENT SPECIFICATION

(11) **EP 3 374 658 B1**
(45) Date of publication and mention of the grant of the patent: **30.12.2020**
(21) Application number: 16864902.8
(22) Date of filing: 09.11.2016
(51) Int. Cl.: F16D 65/097, F16D 55/226, F16D 55/2265, F16D 55/227, F16D 65/092, F16D 55/2255

(54) **DISC BRAKE AND SET OF BRAKE PADS**
SCHEIBENBREMSE UND SATZ AUS BREMSBELÄGEN
FREIN À DISQUE ET JEU DE PLAQUETTES DE FREIN

(30) Priority: 12.11.2015 US 201514939735
(43) Date of publication of application: 19.09.2018
(73) Proprietor: Bendix Spicer Foundation Brake LLC, Elyria, OH 44035 (US); KNORR-BREMSE Systeme für Nutzfahrzeuge GmbH, 80809 München (DE)
(72) Inventor: SCHOENAUER, Manfred, Elyria, Ohio 44035 (US); PAHLE, Wolfgang, Elyria, Ohio 44035 (US); BARTEL, Markus, Elyria, Ohio 44035 (US); FISCHL, Tobias, Elyria, Ohio 44035 (US); BAUMGARTNER, Johann, Elyria, Ohio 4035 (US); PETSCHKE, Andreas, Elyria, Ohio 44035 (US); LANTZ, Richard L., Elyria, Ohio 44035 (US); TEKESKY, Robert S., Elyria, Ohio 44035 (US)
(74) Representative: Specht, Peter
(86) International application number: PCT/US2016/061105
(87) International publication number: WO 2017/083365

(56) References cited:
- WO-A1-01/33096
- WO-A1-2015/050638
- WO-A1-2016/153945
- DE-A1-102012 002 734
- US-A- 4 570 760
- US-A- 5 875 873
- US-A1- 2007 119 666
- US-A1- 2012 006 633
- US-A1- 2015 159 712

## Description

### BACKGROUND AND SUMMARY OF THE INVENTION

The present invention relates to a disc brake, and in particular to a disc brake for a commercial vehicle.

Disc brakes of this type are used in particular in commercial vehicles and are frequently pneumatically-actuated. One embodiment of the brake caliper of disc brakes of this type is in the form of a sliding caliper and is used, for example, in a constricted construction space in the vicinity of an adjacent wheel rim.

A sliding brake caliper is customarily connected to a supporting brake carrier via two bearing struts which are designed as fixed and movable bearings. The brake pads of the disc brake are guided displaceably in the brake carrier and typically are held in a spring-loaded manner in pad slots in the brake carrier by a pad-retaining clip.

During operation of such a vehicle on poor roadways, for example when traversing potholes or/and cross-country, shaking loads occur which may cause vibrations of the brake caliper, including all of the mounted parts. The vibrations of these high-mass components may, inter alia, heavily load the fastening regions of the bearing struts on the brake carrier. Further, these high loads may increase as pad and disc wear increases. As wear increases the brake caliper increasingly moves in the direction of the center of the vehicle, unfavourably increasing lever length, i.e., as the caliper moves toward the vehicle center, the length of the bearing struts (the lever arms about which the disc brake masses are vibrating) increase as the bearing struts telescope outwards.

An example of a spring-loaded pad-retaining clip is illustrated by German Utility Patent No. DE 20 2008 013 446 U1.

Brake-pad-retaining systems are described, for example, in the International Patent Publications No. WO 2013/143993 A1 and WO 2015/050638 A1, German Patent Publication No. DE 10 2012 002 734 A1 and U.S. Patent No. US 8,540,061 B1.

A further brake-pad-retaining system is described in later published International Patent Publication No. WO 2016/153945 A1, in which the pad-retaining clip is placed between respective upper rims of the brake pad back plates and a pad-retaining spring, thereby biasing the respective brake pad in a radially outward direction to bias contact faces of a mount horn and the brake pad against one another to supress brake pad kick and vibration and related brake pad wear and component fatigue.

Against the background of these solutions, there is furthermore a constant requirement for an extended service life of brakes and brake components with a simultaneous reduction in costs.

The invention is therefore based on the object of providing an improved disc brake.

The invention achieves these and other objects by providing disc brake having a guide device that guides and supports the brake caliper in addition to the bearing struts, and providing a set of brake pads configured for use in such a disc brake.

Accordingly, a disc brake for a vehicle, in particular for a commercial vehicle, includes a brake disc with a brake disc rotational axis, at least one application-side and one back-side brake pad (also referred to as a reaction-side brake pad), each brake pad having a respective pad back plate, a brake carrier which accommodates the at least two brake pads in a respective pad slot, wherein one of the at least two brake pads is held in a form-fitting manner in the associated pad slot, a sliding brake caliper which straddles the brake disc, a caliper attached to the brake carrier with bearings, and a pad-retaining clip which is fastened releasably to the brake caliper and by which the at least two brake pads are held in a spring-loaded manner in the brake carrier. The arrangement of the retaining clip and spring-loaded brake pads provide the disc brake with a guide device of the brake caliper, which, in addition to the bearings, guides the brake caliper with respect to the brake carrier and supports the brake caliper on the brake carrier.

Further a method of increasing a guide distance of a sliding brake caliper of a vehicle disc brake for guiding the brake caliper with respect to a brake carrier is provided.

With such an additional guide device of the brake caliper, even in the event of progressive wear of brake pads and brake disc, the brake caliper can additionally be stabilized on the brake carrier by support via the brake pads and guidance with respect to the brake carrier.

In one embodiment, the guide device includes the pad-retaining clip, the at least two brake pads and the pad back plates thereof and at least two pad-retaining springs. This results in the advantage that no additional components are required as compared to a previous commercial vehicle sliding caliper disc brake.

It is provided in a further embodiment that at least the application-side brake pad is in engagement in a form-fitting manner by the pad back plate thereof in the pad slot of the brake carrier with contours of brake carrier horns. Fixing of the application-side brake pad in both radial directions with respect to the brake disc rotational axis is therefore advantageously made possible.

In yet another embodiment, the application-side brake pad is connected by its pad back plate to an application-side pad-retaining spring which is attached to the pad-retaining clip and to the application-side brake pad in such a manner that the application-side pad-retaining spring exerts a tensile force on the application-side brake pad. The back-side brake pad is connected by its pad back plate to a back-side pad-retaining spring which interacts with the pad-retaining clip in such a manner that the back-side pad-retaining spring exerts a compressive force on the back-side brake pad. In this manner, the pad-retaining clip can advantageously be guided between the pad-retaining springs in such a manner that said pad-retaining clip is supported in the radial direction in relation to the brake carrier by the back-side, pressure-loaded brake pad. Alternatively, the back-side brake pad may have a tensile force applied to it in a manner similar to the application-side brake pad with a suitable arrangement of the pad-retaining clip. The pad-retaining clip is furthermore also advantageously fixed in the radial direction which faces away from the brake disc axis since the application-side brake pad is acted upon with a tensile force which is brought about by the form-fitting arrangement of the application-side brake pad in the brake carrier.

The application-side pad-retaining spring pulls the application-side brake pad towards the form-fitting fixing in the brake carrier and can damp vibration deflections of the brake caliper in the radial direction in a manner facing away from the brake disc rotational axis.

The back-side pad-retaining spring can furthermore damp vibrations of the brake caliper with respect to the axis center.

For this purpose, it is provided that the pad-retaining clip extends between a lower side of the application-side pad-retaining spring and an upper side of the application-side pad back plate, wherein the application-side pad-retaining spring rests on an upper side of the pad-retaining clip. This is advantageously possible in a simple manner by the pad-retaining clip simply being able to be pushed between the application-side pad-retaining spring and the pad back plate.

In an alternative embodiment, the application-side pad-retaining spring is arranged in a manner guided displaceably on a rest of a retaining section attached to a lower side of the pad-retaining clip. A tensile force is also thus produced in an advantageously simple manner by the application-side pad-retaining spring.

It is provided that a guide length of the guide device is formed by a distance on the pad-retaining clip between the introduction of the tensile force into the application-side brake pad and the introduction of the compressive force into the back-side brake pad. This guide length increases a previous guide length of the brake caliper, which guide length is formed by the length of the bearings of the latter.

In an alternative embodiment, the guide device includes the pad-retaining clip, the at least two brake pads and the pad back plates thereof, a back-side pad-retaining spring, at least one retaining element and at least one force accumulation element. Additional guidance of the brake caliper via the pad-retaining clip is therefore advantageously made possible.

In one embodiment, at least the application-side brake pad is in engagement in a form-fitting manner by its pad back plate in the pad slot of the brake carrier with contours of brake carrier horns, and the application-side pad back plate is fixedly connected to one end of the at least one retaining element. The retaining element advantageously forms a stabilizing coupling between the pad-retaining clip and the brake carrier via the application-side brake pad.

Guidance of the pad-retaining clip in the longitudinal direction thereof is advantageously realized by the fact that the at least one retaining element is arranged in a manner guided displaceably in an elongated hole in the pad-retaining clip running parallel to the brake disc rotational axis, with a head at the other end of the at least one retaining element being guided in a sliding manner on an upper side of the pad-retaining clip.

It is provided here that the pad-retaining clip is connected in the region of the application-side end section thereof to the brake caliper via the at least one force accumulation element. In this manner, the force accumulation element produces a force which is transmitted as tensile force to the retaining element via the pad-retaining clip.

Alternatively, the at least one force accumulation element can be arranged between the head of the retaining element and the upper side of the pad-retaining clip. The customary holding of an end section of the pad-retaining clip in the brake caliper can advantageously be retained here.

It is advantageous that the at least one force accumulation element produces a tensile force which acts on the application-side brake pad, and that the back-side brake pad is connected by its pad back plate to a back-side pad-retaining spring which interacts with the pad-retaining clip in such a manner that the back-side pad-retaining spring exerts a compressive force on the back-side brake pad. The brake caliper thus can be additionally stabilized, wherein vibration damping also can be increased at the same time. It is also possible that adaptation to different environmental conditions can be simplified by different force accumulation elements which advantageously can be easily exchanged,. Of course, combinations of a plurality of force accumulation elements can also be used.

A set of brake pads for an above-described disc brake for a vehicle, in particular for a commercial vehicle, comprises, in one embodiment, the two brake pads on the respective pad back plate, the associated pad-retaining springs and the pad-retaining clip.

In an alternative embodiment, the set of brake pads for an above-described alternative disc brake for a vehicle, in particular for a commercial vehicle, comprises the two brake pads on the respective pad back plate, the back-side pad-retaining spring, the at least one retaining element, the at least one force accumulation element and the pad-retaining clip.

In the drawings, exemplary embodiments of a disc brake according to the invention and of a set of brake pads according to the invention are illustrated and are described in more detail below, wherein further advantages of embodiments according to the invention are also explained.

### BRIEF DESCRIPTION OF THE DRAWINGS

- Fig. 1: shows a schematic partial sectional view of an embodiment of a disc brake having sliding bearings according to the invention;
- Figs 2 and 3: show perspective views of the disc brake of Fig. 1 with a first embodiment of the guide device;
- Fig. 4: shows a side view of the disc brake of Fig. 1 with the first exemplary embodiment of the guide device;
- Fig. 5: shows a partial sectional view of the disc brake of Fig. 4 with the first exemplary embodiment of the guide device;
- Fig. 6: shows a partial sectional view of the disc brake of Fig. 1 from a brake disc-side of an application-side brake pad located in an associated pad slot of the brake carrier;
- Fig. 7: shows a perspective view of the disc brake of Fig. 1 in a state of brake pad wear;
- Fig. 8: shows a partial sectional view of the disc brakeof Fig. 1 in the state of wear of Fig. 7;
- Fig. 9: shows a perspective view of an embodiment of a disc brake according to the invention with a second embodiment of the guide device;
- Fig. 10: shows a partial sectional view of an embodiment of a disc brake according to the invention with a third embodiment of the guide device;
- Fig. 11: shows a partial sectional view of an embodiment of a disc brake according to the invention with a fourth embodiment of the guide device;
- Fig. 12: shows a partial sectional view of an embodiment of a disc brake according to the invention with a fifth embodiment of the guide device;
- Fig. 13: shows a partial sectional view of an embodiment of a disc brake according to the invention with a sixth embodiment of the guide device;
- Figs. 14A, 14B: shows a partial sectional view and a partial cross-section view, respectively, of an embodiment of a disc brake according to the invention with a seventh embodiment of the guide device; and
- Figs. 15A, 15B: show a partial sectional view and a partial elevation view, respectively, of an embodiment of a disc brake according to the invention with a eighth embodiment of the guide device.

### DETAILED DESCRIPTION

Terms such as "top", "bottom", "right", "left", etc. relate to orientations and arrangements in the figures. Coordinates x, y, z in the figures serve for further orientation.

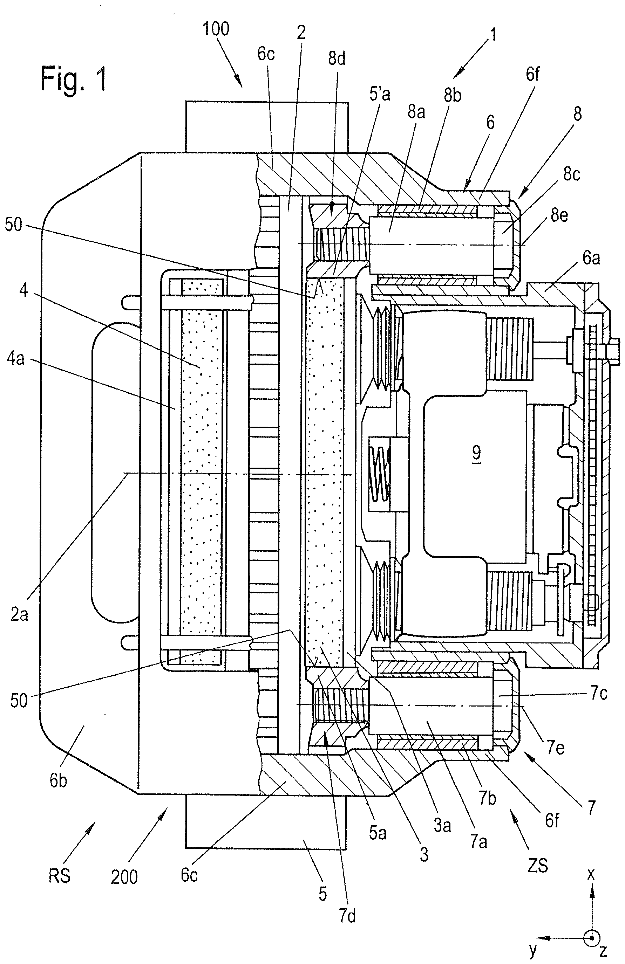

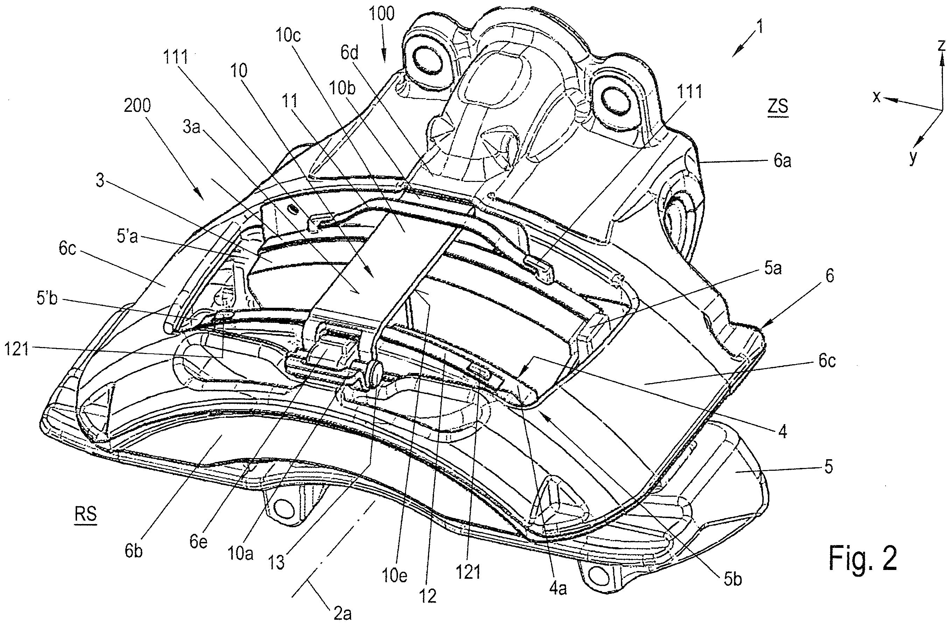

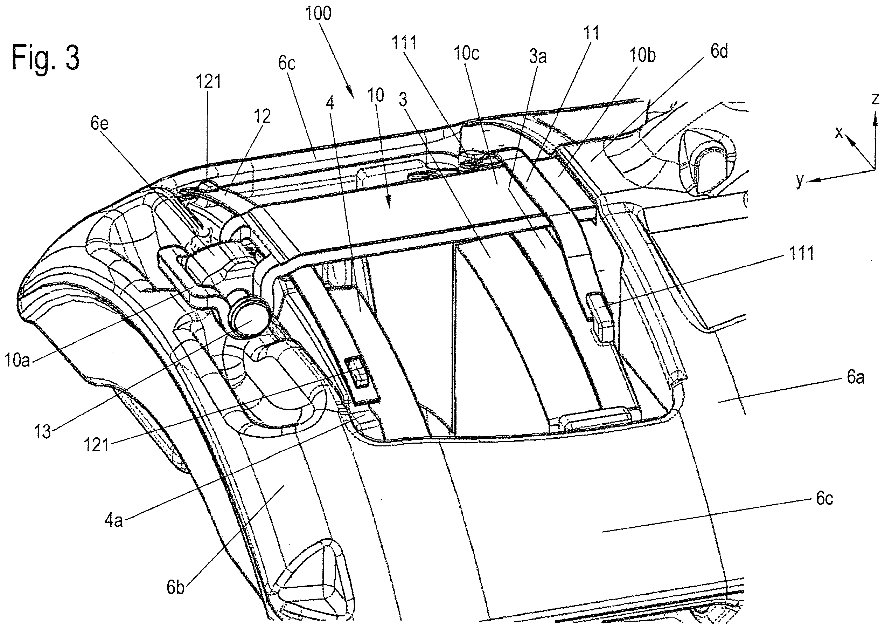

Fig. 1 shows a partial sectional view of an embodiment of a disc brake 1 according to the invention, for example a pneumatic disc brake 1, with a guide device 100 for guiding and supporting a brake caliper 6. Figs 2 and 3 illustrate perspective views of the disc brake according to the invention according to Fig. 1 with a first embodiment of the guide device. For better clarity, a brake disc 2 is not shown in Figs 2 and 3, but is easily imaginable.

The disc brake 1 is, for example, part of the brake system of a vehicle, in particular a commercial vehicle, and comprises a brake disc 2 with a brake disc rotational axis 2a running here in the y direction, two brake pads 3 and 4 which are respectively attached to a pad back plate 3a, 4a, a brake carrier 5, a brake caliper 6 and an application device 9.

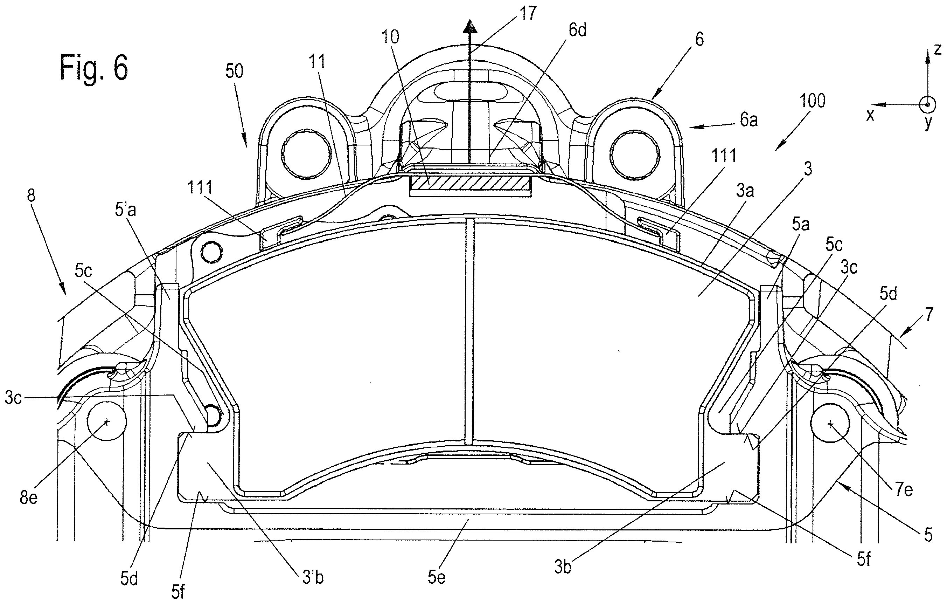

The brake pads 3 and 4 are in each case accommodated in the brake carrier 5 in a pad slot 50 (also see Fig. 6) between two brake carrier horns 5a, 5'a; 5b, 5'b in each case and are held in the brake carrier 5 by a pad-retaining clip 10, which will also be described below. The brake pads 3 and 4 are guided displaceably in the pad slots 50 in the direction of the brake disc rotational axis 2a. During forward travel of the associated vehicle in a positive x direction, the brake disc 2 rotates about the brake disc rotational axis 2a . Therefore, that side of the brake caliper 6 which is located at the bottom in Fig. 1 is referred to as the entry side and the opposite side of the brake caliper 6 at the top in Fig. 1 is referred to as the exit side. Accordingly, the brake carrier horns 5a, 5b are referred to as entry-side brake carrier horns 5a, 5b and the opposite brake carrier horns 5'a, 5'b referred to as exit-side brake carrier horns 5'a, 5'b.

The brake caliper 6 is designed here as a sliding caliper and has an application section 6a and a back section 6b which are connected to each other in the y direction at both ends via connecting sections 6c. The application section 6a and the back section 6b are each arranged here on one side of the brake disc 2 and parallel thereto, wherein the connecting sections 6c extend in the y direction parallel to the brake disc rotational axis 2a. The application section 6a and the back section 6b together with the connecting sections 6c form an opening over the brake disc 2 for access to the brake pads 3 and 4 during installation, exchange and maintenance work.

Furthermore, the brake caliper 6 has two bearing sections 6f which extend parallel to the brake disc rotational axis 2a. The brake caliper 6 is held in a manner guided displaceably in the direction of the brake disc rotational axis 2a on bearing struts 7a, 8a by the bearing sections 6f via bearings 7, 8 on the brake carrier 5, which is fixed in position. The bearings 7, 8 each have one or more bearing shells 7b, 8b which are arranged in the bearing sections 6f and are fastened to the brake carrier 5 in screw-on regions 7d, 8d via a respective bearing screw 7c, 8c. The bearing struts 7a, 7b are each accommodated in a bearing shell 7b, 8b and form a movable bearing and a fixed bearing. The bearings 7, 8 are arranged in such a manner that their bearing axes 7e, 8e running in each case in the y direction run parallel to the brake disc rotational axis 2a.

The application section 6a of the brake caliper 6 accommodates the application device 9 of the disc brake 1. The application device 9 serves for actuating the disc brake 1 and can have, for example, a pivoted brake lever with a compressed air cylinder. This is not described in more detail here.

That side of the disc brake 1 on which the application section 6a of the brake caliper 6 is arranged with the application device 9 is referred to below as application side ZS. The other side of the disc brake 1, on which the back section 6b of the brake caliper 6 is arranged, is referred to below as back side RS, which is also called reaction side. Said terms "application side" and "back side" and other designations referring thereto are conventional and are used for better orientation.

The brake pad 3 with the pad back plate 3a, which is located on the application side ZS, is thus referred to as application-side brake pad 3, and the opposite pad to the latter is referred to as the back-side brake pad 4 with the pad back plate 4a.

The application-side brake pad 3 is acted upon by the application device 9 with an application force in the y direction during braking operations. The back-side brake pad 4 is accommodated in the back section 6b of the brake caliper 6 and, in the case of this disc brake 1 with the brake caliper 6 in a sliding caliper design, does not have any movements relative to the back section 6b.

The brake pads 3 and 4 are each provided on the upper sides of the respective pad back plate 3a, 4a thereof with a pad-retaining spring 11, 12 which are each coupled to spring holders 111, 121 on the respective pad back plate 3a, 4a. The pad-retaining springs 11, 12 interact with the pad-retaining clip 10 and, with the latter, form a guide device 100 for the brake caliper 6. This is also explained in more detail below.

The pad-retaining clip 10 extends in the y direction over the opening which is formed over the brake disc 2 by the application section 6a, the back section 6b and the connecting sections 6c, and is arranged over the fitted brake pads 3, 4 in such a manner that said pad-retaining clip is accommodated with an application-side end section 10b in a retaining section 6d of the application section 6a of the brake caliper 6, wherein an opposite end section 10a of the pad-retaining clip 10 is connected to a retaining section 6e of the back section 6b of the brake caliper 6. Said back-side end section 10a of the pad-retaining clip 10 is secured in its position by a securing element 13, for example a bolt.

In this example, the guide device 100 comprises the pad-retaining clip 10, the brake pads 3, 4 and the pad-retaining springs 11 and 12 thereof.

The guide device 100 forms an enlarged guide length for the brake caliper 6, which is also explained in more detail below, and, in addition to the bearings 7 and 8, supports and guides the brake caliper 6 with respect to the brake carrier 5 via the brake pads 3, 4. Support on the brake carrier 5 takes place via the brake pads 3, 4 and the pad back plates 3a, 4a. Guidance is realized by interaction of the pad-retaining clip 10 with the pad-retaining springs 11, 12 of the brake pads 3, 4 and the pad back plates 3a, 4a of the brake pads 3, 4.

In this embodiment, the pad-retaining clip 10 is arranged over the brake pads 3, 4 in such a manner that the pad-retaining clip 10 extends with a retaining section 10c, which extends approximately from the center of the pad-retaining clip 10 as far as the application-side end section 10b of the pad-retaining clip 10, between a lower side of the application-side pad-retaining spring 11 of the application-side brake pad 3 and an upper side of the application-side pad back plate 3a. In other words, the application-side pad-retaining spring 11 rests on an upper side 10d of the pad-retaining clip 10 on the retaining section 10c of the pad-retaining clip 10. The pad-retaining spring 11 here exerts a tensile force in the z direction radially with respect to the brake disc rotational axis 2a on the application-side pad back plate 3a and on the application-side brake pad 3. For this purpose, the spring holder 111 is designed in a corresponding manner (not shown, but easily imaginable). The application-side pad back plate 3a introduces said tensile force into the brake carrier 5, as is also described below.

In the region of the back-side brake pad 4, the pad-retaining clip 10 is in contact by a lower side 10e with the back-side pad-retaining spring 12 of the back-side pad back plate 4a. The pad-retaining clip 10 here exerts a compressive force on the back-side pad-retaining spring 12, which compressive force is transmitted to the back-side pad back plate 4a and the back-side brake pad 4. The back-side brake pad 4 introduces said compressive force, which runs in the radial direction, i.e. in the negative z direction, with respect to the brake disc rotational axis 2a, into the brake carrier 5 via the back-side pad back plate 4a.

The back-side pad-retaining spring 12 thereby damps the brake caliper 6 in the direction of the axis center of the brake disc rotational axis 2a.

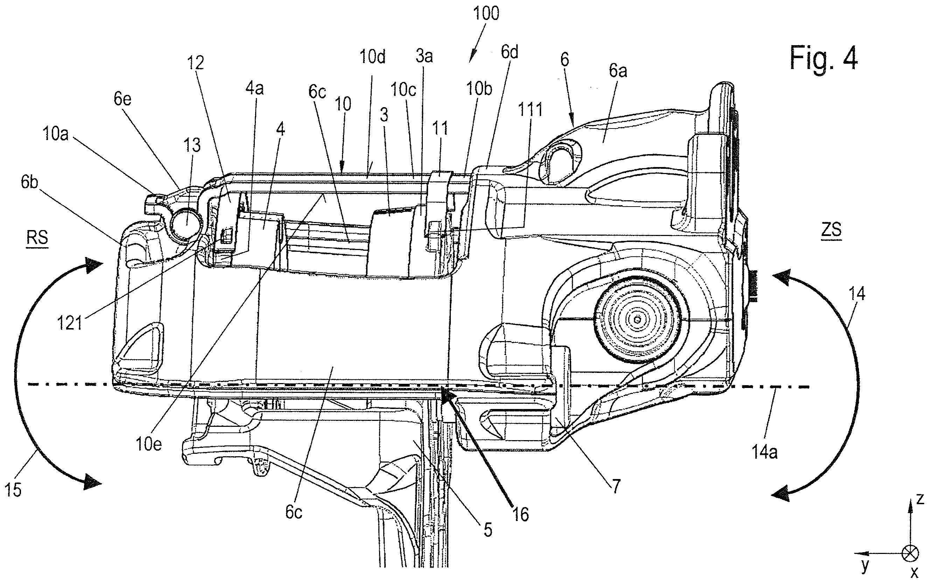

Fig. 4 shows a schematic side view of the disc brake 1 according to the invention according to Figs 2 and 3 with the first embodiment of the guide device 100. For better clarity, the brake disc 2 is not shown in Fig. 4, but is easily imaginable.

In Fig. 4, a semicircular arc with arrows is indicated in each case on the application side ZS and on the back side RS. Said semicircular arcs represent vibrations 14 and 15 about a virtual pivot point 16 on an axis 14a extending approximately parallel to the brake disc rotation axis 2a.

In the event of shaking loads which occur, for example, during use on poor roadways, traversing pot holes or else cross country, the brake caliper 6 including all of the mounted parts between the bearing struts 7b, 8b (see Fig. 1) executes vibrations about a screw-on plane containing the screw-on regions 7d, 8d. Said vibrations 14, 15 are indicated by way of example in Fig. 4. By said vibrations 14, 15, heavy loads are applied in the screw-on regions 7d, 8d, in the bearing screws 7c, 8c, the bearing shells 7b, 8b and the bearing struts 7a, 8a due to the large moving masses of the disc brake components. These loads may be particularly severe in the commercial vehicle sector where the disc brake mass may exceed 100 lbs.

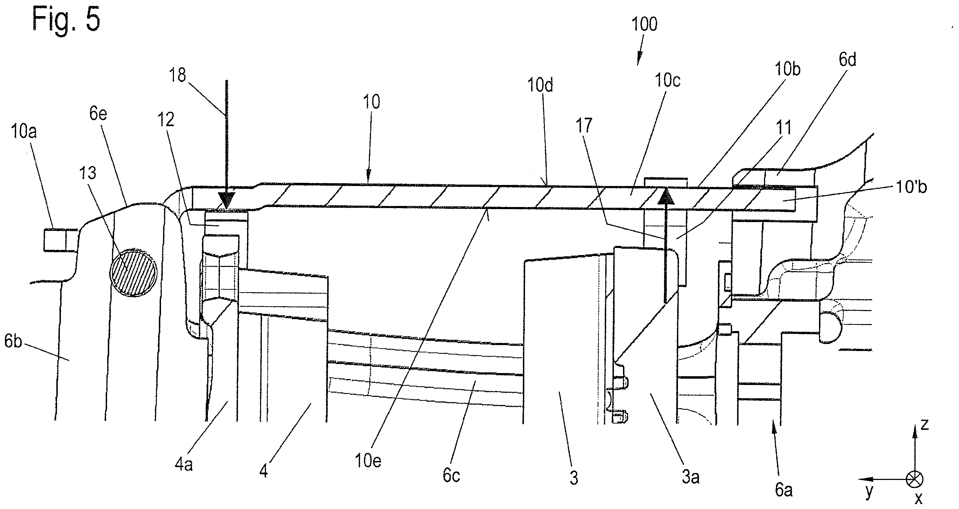

Fig. 5 illustrates a partial sectional view of the disc brake 1 according to the invention according to Fig. 4 in a y-z section plane in the brake disc rotational axis 2a.

The application-side pad-retaining spring 11 rests with the lower side thereof on the retaining section 10c of the pad-retaining clip 10 and is thereby pretensioned in the positive z direction. A tensile force 17 resulting from said pretensioning is shown as an arrow in the positive z direction.

The back-side pad-retaining spring 12 is in contact by the upper side thereof with the lower side 10e of the pad-retaining clip 10, wherein a compressive force 18 is introduced onto the back-side pad back plate 4a.

The pad-retaining clip 10 is mounted on one side by the application-side end section 10b thereof in the retaining section 6d with an end 10'b on the application section 6a of the brake caliper 6. On the other side, the back-side end section 10a of the pad-retaining clip 10 on the reaction section 6b of the brake caliper 6 is held and fastened on the retaining section 6e via the securing element 13.

Fig. 6 shows a partial sectional view of the disc brake 1 according to the invention with a view of the application-side brake pad 3 in the associated application-side pad slot 50.

The application-side pad slot 50 in this embodiment is bounded on both sides by the brake carrier horns 5a, 5'a and is closed on the lower side thereof by a strut 5e. Each brake carrier horn 5a, 5'a has approximately in the center thereof in the z direction, a respective lug 5c which protrudes inwards into the pad slot 50, here with rounded corners. An undercut 5d is formed below each lug 5c, which undercut is formed into the respective brake carrier horn 5a, 5'a in each case outwards, i.e., in an x-z plane from the pad slot 50, and forms a contour in each case with the lug 5c. Each undercut 5d runs below each lug 5c first of all in the respective x direction into the respective brake carrier horn 5a, 5'a. Said respective contour then runs in each case at a right angle in the brake carrier horn 5a, 5'a downwards in a negative z direction as far as a rest 5f which, for its part, extends at a right angle towards the inner side of the pad slot 50 over a distance which approximately corresponds to the length of the undercut 5d below each lug 5c. Said rests 5f are connected by the strut 5e, wherein an upper side of the strut 5e lies lower, i.e. in the negative z direction, than the surfaces of the rests 5f. In alternative embodiments, when not under tensile loading the brake pad may be supported in a different manner than in this embodiment. For example, the strut 5e between the horns may be eliminated entirely and the lugs 5c provided with pad resting surfaces on the tops of the lugs (for example, corresponding flats on the lugs and on portions of the brake pad back plate directly above the lug flats. Other embodiments may dispense with Fig. 6's rests 5f (the regions that are slightly elevated above the adjacent strut 5e upper surface), as long as the brake pad is adequately supported on the carrier horns at a higher location in the pad slot 50.

Each side in the z direction of the application-side pad back plate 3a likewise has such a contour with a respective rectangular projection 3b, 3'b which corresponds to the contour of the pad slot 50. In this manner, the application-side brake pad 3 is accommodated in a form-fitting manner by the pad back plate 3a thereof in the application-side pad slot 50 in the contours with the lug 5c and with the undercut 5d in such a manner that the application-side brake pad 3 is guided displaceably in the y direction but is constrained in the positive and negative z direction.

In alternative embodiments, the projection convex surfaces may be located on the brake pad side with corresponding concave form-fitting features on the mount horns, or may include straight horn side faces with brake pad projections that extend into corresponding axially-aligned slots in the horns.

The tensile force 17 which is exerted into the application-side pad back plate 3a via the pretensioned, application-side pad-retaining spring 11, via the couplings thereof in the spring holders 111 is introduced by the form-fitting connection of the projections 3b, 3'b via the upper surfaces 3c, 3'c thereof into the undercut 5d and therefore into the lugs 5c of the brake carrier horns 5a, 5'a and in this manner into the brake carrier 5.

In the above-described Figures 1 to 5, the brake pads 3, 4 are substantially in the new state, i.e. no wear has yet occurred.

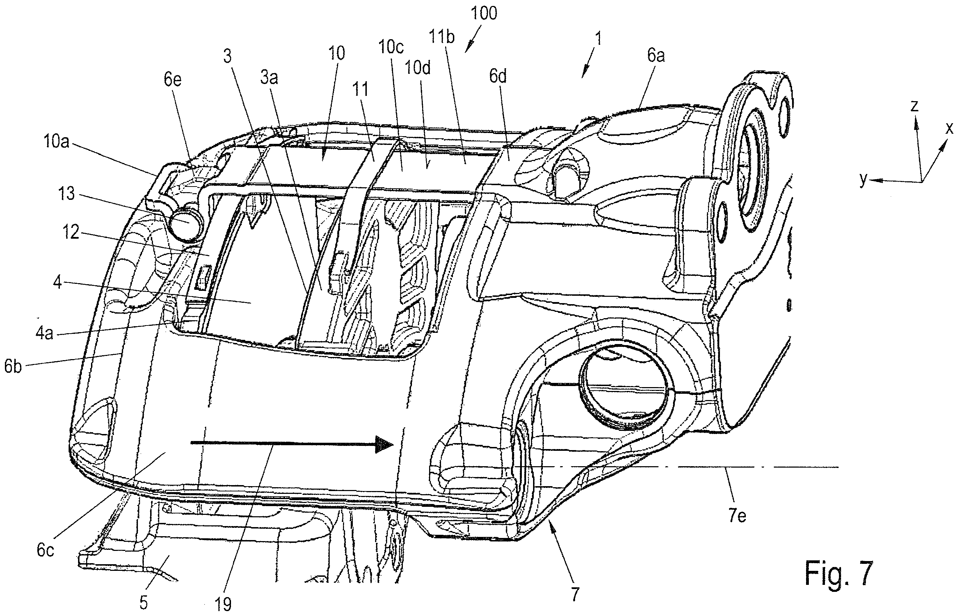

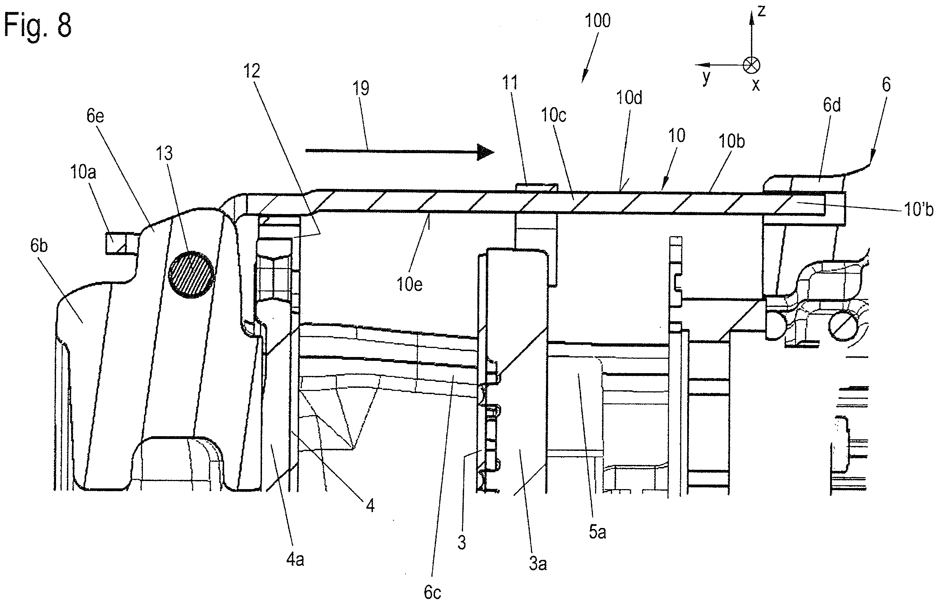

In contrast, Figs 7 and 8 show the disc brake 1 with worn, i.e. abraded, brake pads 3, 4. Fig. 7 illustrates a perspective view of the disc brake 1 according to the invention in a state of wear. Fig. 8 shows a partial sectional view of the disc brake 1 according to the invention according to Fig. 7.

As the wear of the brake pads 3, 4 (and also of the brake disc 2, which is not illustrated here but is easily imaginable) increases, the brake caliper 6 increasingly moves in the negative y direction, i.e. in the direction of the brake disc rotational axis 2a, toward the center of the vehicle. The caliper displacement direction is indicated by an arrow 19. The brake caliper 6 is displaced on the bearing struts 7a, 8a (see Fig. 1) in the direction of bearing axes 7e, 8e, of which only the bearing axis 7e is shown in Fig. 7. As a result, lever lengths of the bearings 7, 8 are unfavourably extended with respect to the screw-on regions 7d, 8d (see Fig. 1), as a result of which the screw-on regions 7d, 8d can be more heavily loaded by the vibrating disc brake masses.

At the same time, however, the guide device 100 functions by the application-side pad-retaining spring 11 pulling the application-side brake pad 3 against the lugs 5c of the brake carrier 5 and, via the interaction of the retaining pin end 10'b with the retaining section 6d of brake caliper application side 6a, thus supports the brake caliper 6 in the positive z direction. The application-side pad-retaining spring 11 is guided here via the fitted pad-retaining clip 10, thus resulting in an increased guide length. As Figs 7 and 8 show, the application-side pad-retaining spring 11 is located on the upper side 10d on the retaining section 10c approximately in the centre of the pad-retaining clip 10 and thus additionally contributes to supporting the brake caliper 6.

The enlarged guide length of the brake caliper 6 is designed in such a manner that the pad-retaining clip 10 connected thereto is supported on one side on the brake carrier 5 via the back-side pad back plate 4a of the back-side brake pad 4 and on the other side likewise interacts with the brake carrier 5 via the application-side pad back plate 3a of the application-side brake pad 3 by the tensile force exerted by the pad-retaining spring 11. In other words, the guide length of the brake caliper 6, previous defined by the lengths of the bearings 7, 8 (see Fig. 1), is increased by the mounting of the pad-retaining clip 10 over the brake pads 3, 4 by the distance in the y direction between the contact points of the tensile force 17 and of the compressive force 18 on the pad-retaining clip 10 (see Figs 5 and 8) . In addition, the pad-retaining clip 10 is thereby held in the z direction between the pad-retaining springs 11 and 12 and is guided displaceably in the y direction with the caliper 6.

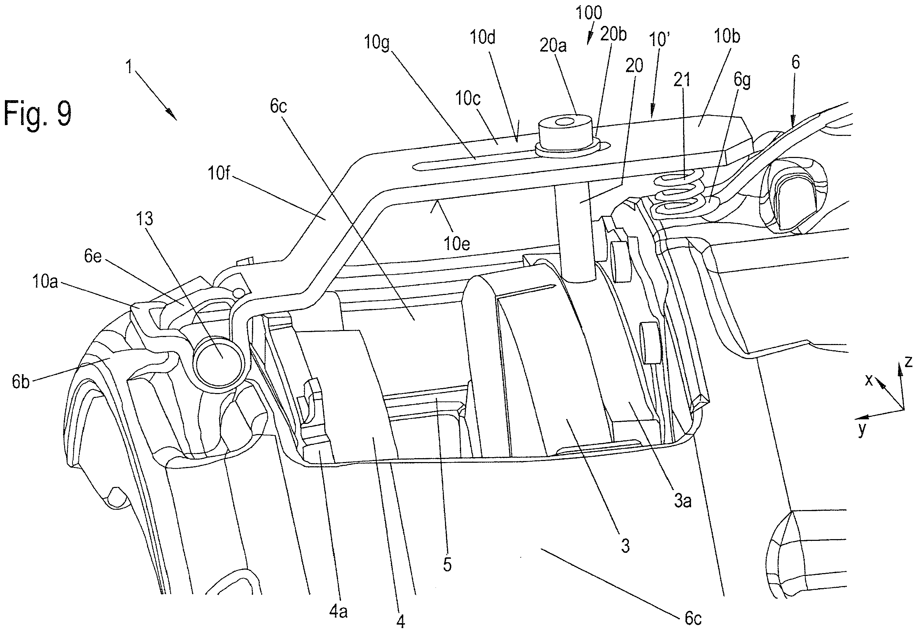

Fig. 9 shows a perspective view of the disc brake 1 according to the invention with a second embodiment of the guide device 100.

In this second embodiment, the guide device 100 has the pad-retaining clip 10', the brake pads 3, 4, the back-side pad-retaining spring 12, a retaining element 20 and a force accumulation element 21 through which the pad-retaining clip 10' interacts with the brake caliper application side 6a.

In this case, the pad-retaining clip 10' in the region between the back-side pad-retaining spring 12 and the back-side pad-retaining spring 11 is bent upwards by a transition section 10f running obliquely upwards. The retaining section 10c continues to run towards the application section 6a of the brake caliper 6, but is connected thereto via a force accumulation element 21. The force accumulation element 21 here is a compression spring which is pretensioned in the shown position of the pad-retaining clip 10', supported at one end in a receptacle 6g of the application section 6a of the brake caliper 6, and pretensioned by installation of the retaining element 20. The other end of the force accumulation element 21 is in contact with the lower side 10e of the end section 10b of the pad-retaining clip 10'. Said end can be fastened to the latter or in the receptacle 6g in a manner not illustrated specifically.

A guide connection is formed by the application-side pad back plate 3a of the application-side brake pad 3 cooperating with and the retaining element 20 and the force accumulation element 21. The retaining element 20 here is a bolt which, at an upper end, has a head 20a and, with a bolt body in the retaining section 10c of the pad-retaining clip 10', is guided displaceably in an elongated hole 10g in the y direction parallel to the brake disc rotational axis 2a. A lower side of the head 20a rests here in a sliding manner on the upper side 10d of the pad-retaining clip 10 via a disc 20b. The elongated hole 10g is formed into the retaining section 10c of the pad-retaining clip 10' and extends in the y direction parallel to the brake disc rotational axis 2a in a length which corresponds with at least a length of the caliper displacement 19 depending on the overall extent of anticipated wear of brake pads 3, 4 and brake disc 2.

The other end of the retaining element 20 is fastened in the application-side pad back plate 3a, for example with a thread.

The pad-retaining clip 10' is acted upon by the force accumulation element 21 with a force, which with the pad-retaining clip 10', produces a torque about an axis of the securing element 13 and at the same time acts upon the retaining element 20 in the positive z direction with a tensile force which introduces the force via the pad back plate 3a into the brake carrier 5, as described above.

The pad-retaining clip 10' guides the retaining element 20 through the elongated hole 10g. Furthermore, the pad-retaining clip 10', as described above in the first embodiment, rests on the back-side pad-retaining spring 12 and presses the back-side brake pad 4 via the pad back plate 4a thereof downwards into the brake carrier 5.

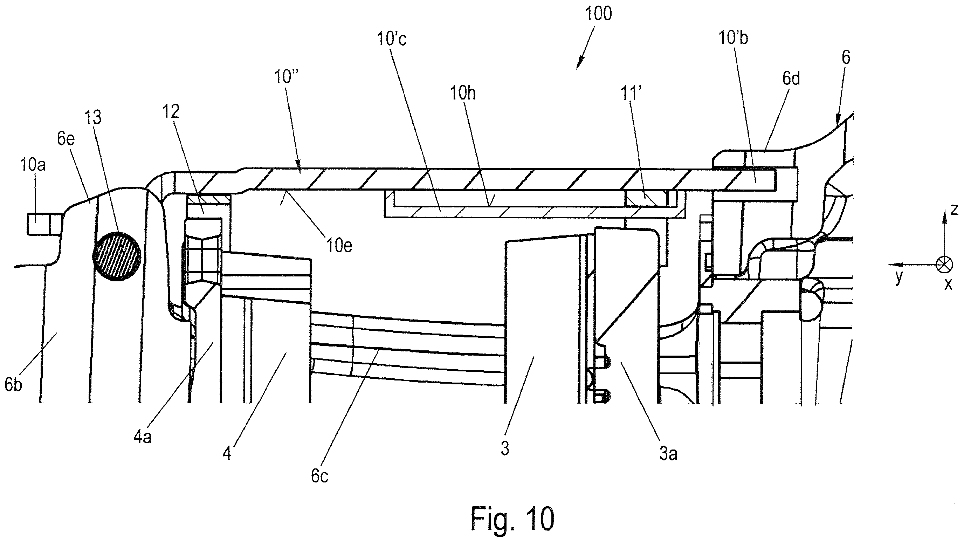

Fig. 10 illustrates a partial sectional view of the disc brake 1 according to the invention with a third embodiment of the guide device 100.

In this third embodiment, the guide device 100 includes the pad-retaining clip 10", the brake pads 3, 4, the application-side pad-retaining spring 11 and the back-side pad-retaining spring 12.

The application-side pad-retaining spring 11 is arranged here in a manner guided displaceably on a rest 10h of a retaining section 10'c attached to the lower side 10e of the pad-retaining clip 10". Said retaining section 10'c can be, for example, a type of clip which extends between the lower side of the application-side pad-retaining spring 12 and the upper side of the application-side pad back plate 3a. The retaining section 10'c can be fastened to the lower side 10e of the pad-retaining clip 10" in various ways, for example, it can be screwed, riveted, welded or the like.

The tensile force is produced by the tensioned, application-side pad-retaining spring 11, as explained above in the first embodiment, is transmitted into the application-side pad back plate 3a and is introduced by the latter into the brake carrier 5.

A length of the rest 10h corresponds with at least a length of the caliper displacement 19 depending on the overall extent of wear of brake pads 3, 4 and brake disc 2.

The reference sign 200 refers to a set of brake pads which, in the first exemplary embodiment of the guide device 100, comprises the two brake pads 3, 4 on the respective pad back plate 3a, 4a, the associated pad-retaining springs 11, 12, and the pad-retaining clip 10.

In the second embodiment of the guide device 100, the set of brake pads 200 comprises the two brake pads 3, 4 on the respective pad back plate 3a, 4a, the back-side pad-retaining spring 12, the pad-retaining clip 10', the retaining element 20 and the force accumulation element 21.

The set of brake pads 200 for the third embodiment of the guide device 100 comprises the two brake pads 3, 4 on the respective pad back plate 3a, 4a the application-side pad-retaining spring 12, the back-side pad-retaining spring 12 and the pad-retaining clip 10" with the retaining section 10'c on the lower side 10e of the pad-retaining clip 10".

The set of brake pads 200 can be used in all disc brakes 1 having a sliding caliper and a correspondingly formed brake carrier, in particular for commercial vehicles.

In order to establish the tensile preloading of the application-side pad-retaining spring 11 after the brake pads 3, 4 have been inserted into the disc brake 1 with the first pad-retaining clip embodiment, first the end 10b of the pad-retaining clip 10 may be inserted into a gap between the upper surface of the brake pad back plate 3a and the lower surface of the pad-retaining spring 11, then pulled radially upwards and toward the brake caliper application-side 6a until the end 10'b is in its installed position at the brake caliper application-side 6a. Then the opposite end 10a of the pad-retaining pin 10, which reaches its installed position at back-side 6b of the brake caliper 6 at the same time the application-side end 10b reaches its installed position, may be secured to the back-side 6b, for example with the securing element 13. If necessary, the back-side end 10a may be pushed radially downward to bring the end 10b closer to the brake caliper back-side 6b if the spring force of the back-side pad-retaining spring 12 is supporting the pad-retaining clip 10 above brake caliper back-side 6b.

Alternative approaches to installing the pad-retaining clip 10 in a manner that produces the desired tensile force at the application-side brake pad may be used, and may vary depending on the design of the specific pad-retaining clip. pad-retaining spring and brake caliper arrangements. For example, an embodiment of the brake caliper receiving section 6d may include a ramped lower surface that receives the pad-retaining clip end 10b first at a height in the z-direction low enough to not induce a significant tensile load in pad retaining spring 11 (i.e., allowing the pad-retaining clip end 10b to be easily started into the receiving section 6d), yet causes the end 10b to rise in the z-direction the further the end 10b is inserted into the receiving section 6d, thereby displacing the pad-retaining spring 11 in the z-direction and thereby increasing the tensile loading.

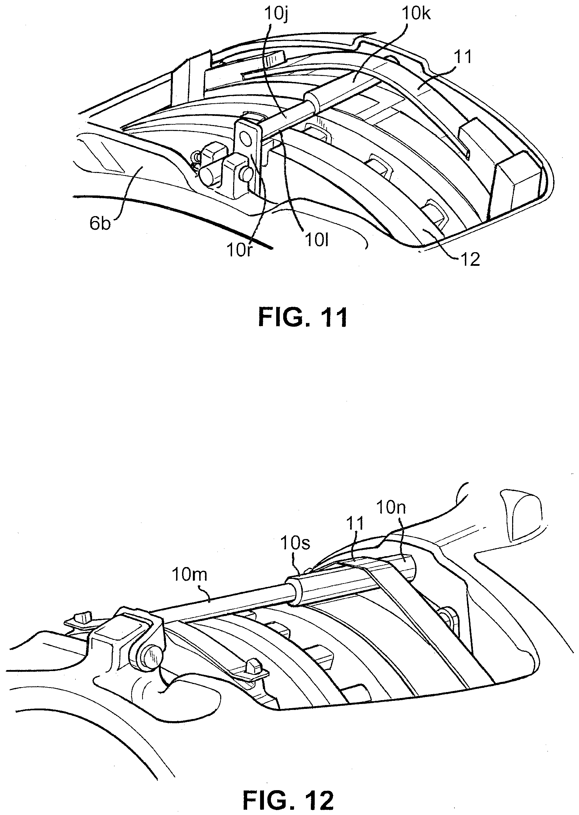

Alternative pad-retaining clip arrangements are also possible. For example, Figs. 11-15 illustrate partial perspective views of the disc brake 1 according to the invention with further alternative embodiments of the guide device 100 and its pad-retaining clip 10.

In the Fig. 11 embodiment, the pad-retaining clip 10 is formed as a rotatable pin 10j having along at least a portion one or more offset camming surfaces 10k. The rotatable pin 10j may be inserted into the gap between the top surface of the brake pad back plate 3a and the surface of the pad-retaining spring 11 in a first orientation that allows the end of pin to engage the brake caliper application side 6a, followed by rotation of the pin 10j using crank portion 10r such that the offset camming surface 10k rotates from a horizontal orientation to a vertical orientation that displaces the pad-retaining spring 11 in the z-direction and thereby increases the tensile loading. Once the pin 10i has been rotated to the vertical orientation the crank end 10r may be secured on the caliper back side 6b. In an advantageous alternative, the rotatable pin 10j has a second offset camming surface 101 at the back-side end of the pin 10j. The camming surface 101 projects outward in the opposite direction from the application-side camming surface 10k, such that when the pin is rotated both the application-side pad-retaining spring 11 is raised and the back-side pad-retaining spring 12 is pressed downward.

Another rotatable pin embodiment is illustrated in Fig. 12. In this embodiment the pad-retaining clip 10 is in the form of a pin 10m which carries a rotatable sleeve 10n with an offset camming surface. An advantage of this embodiment is that the sleeve 10n may be provided with a complementary feature such as a dimple and a groove at the internal pin/sleeve interface to preclude relative rotation (not illustrated here, but easily envisioned). With such an arrangement, when the sleeve 10n is rotated with the pin 10m without relative motion between the sleeve 10n and pin 10m, the pad-retaining spring 11 is raised to generate the desired tensile loading. At the end of the rotary motion, the sleeve 10n may have a surface such as a plane 10s to effectively lock the sleeve against the underside of the pad-retaining spring 11 during brake operation.

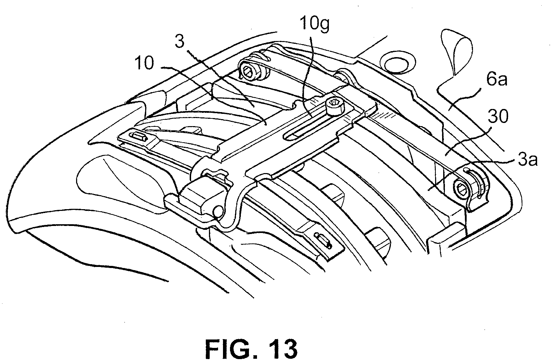

Fig. 13 illustrates an embodiment in which the same caliper support functionality is provided, but the tensile loading is created by interaction of a spring element that is separate from the application-side brake pad 3. As shown in Fig. 13, the application-side brake pad back plate 3a may be attached at its top surface to the pad-retaining clip 10 via elongated hole 10g. Then the pad-retaining clip 10 may be advanced toward the tension element 30, in this embodiment a leaf spring similar to the pad-retaining spring 11, attached at its opposite ends on the disc brake structure (i.e., not on the brake pad back plate 3a), for example, on the brake caliper application-side 6a as shown in Fig. 13. The pad-retaining clip 10 would then be advanced into engagement with the brake caliper application side 6a while pressing upward on the tension element 30 in a manner similar to the foregoing embodiments.

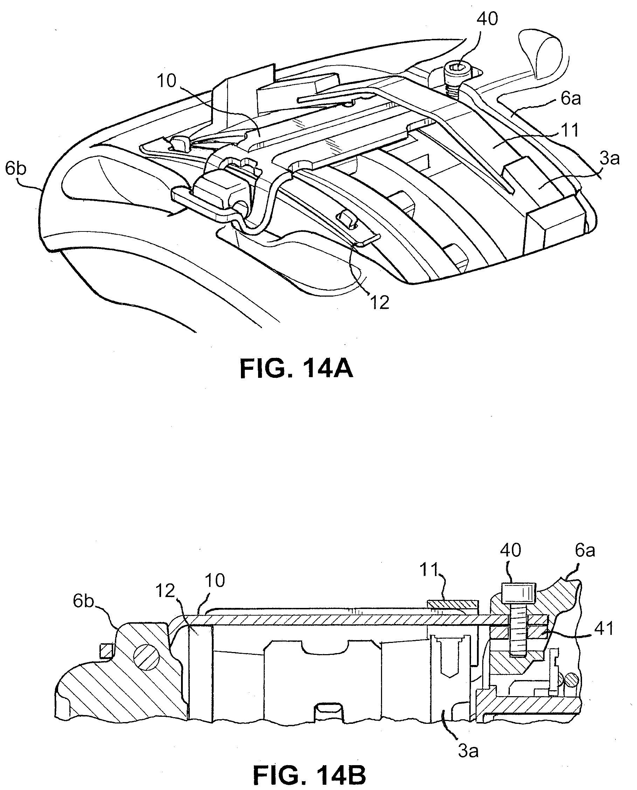

Fig. 14A shows another embodiment in which the pad-retaining clip 10, pad-retaining spring 11 and brake caliper application side 6a are arranged such that the pad-retaining clip 10 may be advanced into engagement with the brake caliper application side 6a with little or no tensile loading being generated. After being advanced, in this embodiment a pad-retaining clip end-raising element, such a bolt 40 that rests on bottom of the caliper retaining section 6d passes through the end 10b and threads into a nut plate 41, as shown in Fig. 14B. When the bolt 40 is rotated the nut plate 41 draws the pad-retaining clip 10 upward relative to the brake caliper application side 6a to establish the desired tensile loading. Alternatively, the bolt 40 may engage directly into corresponding threads in the pad-retaining clip end 10b to pull the end 10b upward to increase the tensile loading.

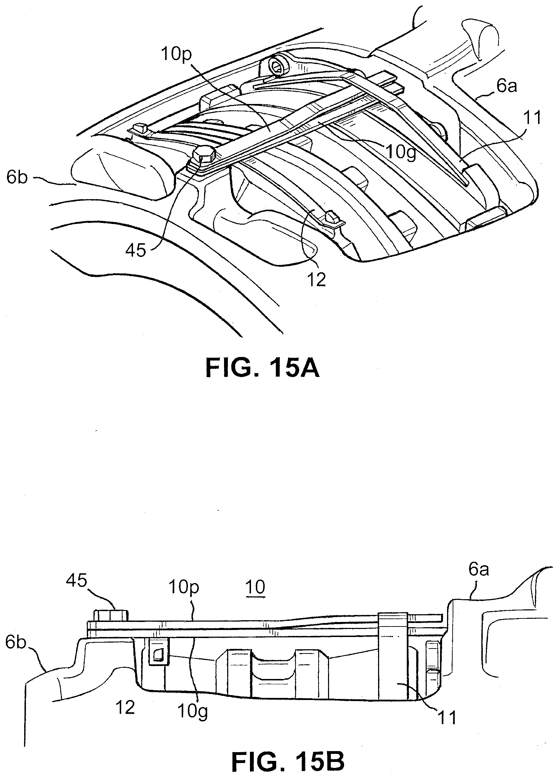

The pad-retaining clip of the present invention is not limited to one-piece elements such as a those in Fig. 1. For example, Figs. 15A and 15B show a multi-part pad-retaining clip 10 having two bars 10p, 10q arranged in a "scissors"-like manner. The offset bars 10p, 10q may be easily installed without generating significant tensile loading. The upper bar 10p has a bend at approximately its mid-point, and extends under the application-side pad-retaining spring 11 without entering the caliper retaining section 6d. Once the bars 10p, 10q are positioned under the pad-retaining spring 11, the back-side ends of the bars are then brought together at the brake caliper back-side 6b and secured with a pad-retaining clip back-side end-raising element, such the bolt 45. As the bolt 45 draws the bars 10p, 10q down to the upper surface of the brake caliper back-side 10b, the bars compress the back-side pad-retaining spring 12 while tensioning the application-side pad-retaining spring 11 to the desired tensile loading as the upper bar 10p rotates about its mid-point bend on the lower bar 10q.

The invention is not restricted by the above-described exemplary embodiments, but rather can be modified within the scope of the attached claims.

For example, in the second embodiment the force accumulation element 21 may be arranged between the head 20a of the retaining element 20 and the upper side 10d of the pad-retaining clip 10", such that the application-side end section 10b of the pad-retaining clip 10" engages the retaining section 6d of the brake caliper 6, as in the other embodiments.

Because such modifications of the disclosed embodiments incorporating the spirit and substance of the invention may occur to persons skilled in the art, the invention should be construed to include everything within the scope of the appended claims.

### List of reference signs

- 1: Disc brake
- 2: Brake disc
- 2a: Brake disc rotational axis
- 3, 4: Brake pad
- 3a, 4a: Pad back plate
- 3b, 3'b: Projection
- 3c, 3'c: Surface
- 5: Brake carrier
- 5a, 5'a; 5b, 5'b: Brake carrier horn
- 5c: Lug
- 5d: Undercut
- 5e: Strut
- 5f: Rest
- 6: Brake caliper
- 6a: Application section
- 6b: Reaction section
- 6c: Connecting section
- 6d, 6e: Retaining section
- 6f: Bearing section
- 6g: Spring receptacle
- 7, 8: Bearing
- 7a, 8a: Bearing strut
- 7b, 8b: Bearing shell
- 7c, 8c: Bearing screw
- 7d, 8d: Screw-on region
- 7e, 8e: Bearing axis
- 9: Application device
- 10, 10', 10": Pad-retaining clip
- 10a, 10b: End section
- 10'b: End
- 10c, 10'c: Retaining section
- 10d: Upper side
- 10e: Lower side
- 10f: Transition section
- 10g: Elongated hole
- 10h: Rest
- 10j: Rotatable pin
- 10k: Camming surface
- 10m: Pin
- 10n: Rotatable sleeve 10p, 10q Bars
- 10r: Crank
- 10s: Plane
- 11, 11'; 12: Pad-retaining spring
- 13: Securing element
- 14, 15: Vibration
- 14a: Axis of rotation
- 16: Pivot point
- 17: Tensile force
- 18: Compressive force
- 19: Caliper displacement
- 20: Retaining element
- 20a: Head
- 20b: Disc
- 21: Force accumulation element
- 30: Tension element
- 40: Bolt
- 41: Nut plate
- 45: Bolt
- 50: Pad slot
- 100: Guide device
- 111, 121: Spring holder
- 200: Set of brake pads
- RS: Back side
- ZS: Application side
- x, y, z: Coordinates

## Claims

1. A disc brake (1) for a vehicle, comprising:
a brake disc (2) with a brake disc rotational axis (2a);
a brake caliper (6) having an application-side and a back-side and being configured to straddle the brake disc (2);
an application-side brake pad (3) and a back-side brake pad (4) with respective brake pad back plates (3a, 3b);
a brake carrier (5) configured to straddle the brake disc (2) and configured support the brake caliper (6) in an axially-displaceable manner on an axis parallel to the brake disc rotation axis (2a) and having contours in application-side and back-side carrier brake pad slots, the contours of the brake carrier means being configured to cooperate with form-fitting complementary features of the application-side and back-side brake pads (3, 4) to constrain the application-side brake pad (3) against radial movement away from the brake disc rotational axis (2a) and the back-side brake pad (4) against radial movement toward the brake disc rotational axis (2a),
the brake caliper (6) being supported on the brake carrier (5) by at least two bearing struts (7a, 8a) configured to permit sliding of the brake caliper (6) relative to the brake carrier (5) along a direction parallel to the brake disc rotational axis (2a);
pad-retaining means configured to be releasably held on the brake caliper (6) and straddle the brake pads (3, 4);
application-side tensioning means configured to apply a tensile force to the application-side brake pad (3); and
wherein
the pad-retaining means is retained on the back-side of the brake caliper (6) and is in a force-transferring relationship with the application-side of the brake caliper (6),
**characterized by**
back-side compression means configured to apply a compressive force to the back-side brake pad (4),
wherein the pad-retaining means, brake carrier means, brake pads (3, 4) and application-side tensioning means and back-side compression means form a guide device arranged such that the pad-retaining means cooperates with the application-side tensioning means to apply the tensile force to the application-side brake pad (3) in a direction radially away from the brake disc rotational axis (2a) and with the back-side compression means to apply the compressive force to the back-side brake pad (4) in a direction radially toward the brake disc rotational axis (2a).

2. The vehicle brake disc brake (1) of claim 1, wherein
the pad-retaining means is a pad-retaining clip (10, 10', 10")

3. The vehicle disc brake of claim 2,
wherein the pad-retaining clip applies (10, 10', 10") the compressive force to the back-side brake pad back plate (4a) via the backside compression element.

4. The vehicle disc brake of claim 3, wherein
the application-side tensioning element and the back-side compression element are springs (11, 12) arranged radially above of an upper surface of their respective application-side and back-side brake pads (3, 4).

5. The vehicle disc brake of claim 4, wherein
the springs (11, 12) are coupled to their respective brake pad back plates (3a, 4a), and
the pad-retaining clip (10) passes over the back-side spring (12) and under the application-side spring (11).

6. The vehicle disc brake of claim 4, wherein
the application side spring (11) is supported on the brake caliper (5) radially above and axially displaced from the application side brake pad (3),
the pad-retaining clip (10', 10") passes over the back-side spring (12) and over the application-side spring (11), and the pad-retaining clip (10', 10") is coupled to the upper surface of the application-side brake pad (3) such that the application-side spring (11) applies the tensile force to the application-side brake pad (3) via the pad-retaining clip (10', 10").

7. The vehicle disc brake of claim 6, wherein
the pad-retaining clip (10') is coupled to the upper surface of the application-side brake pad (3) by a fastener located in a slot (10g) in the pad-retaining clip (10'), and
the tensile force is applied to the application-side brake pad via the fastener.

8. The vehicle disc brake of claim 7, wherein
the pad-retaining clip slot (10g) is at least as long as the combined thickness of an application-side brake pad friction material, a back-side brake pad friction material and anticipated rotor wear, such that relative motion between the pad-retaining clip (10') and the fastener as a result of axial displacement of the sliding brake caliper (6) is accommodated without axial blocking of the pad-retaining clip (10') against the fastener.

9. The vehicle disc brake of claim 4, wherein
the springs (11, 12) are coupled to their respective brake pad back plates (3a, 4a) by retaining features on the upper surfaces of the respective back plates (3a, 4a) configured to engage and retain corresponding surfaces at the ends of each spring (11, 12).

10. The vehicle disc brake of claim 1 or 9, wherein
the guide device applies a support force to the brake caliper (6) radially away from the brake disc rotation axis (2a), and
the support force is generated over a guide length extending from the back-side brake pad back plate (4a) toward the application-side of the brake caliper (6) by the interaction of the pad-retaining clip (10) applying the compressive force to the back-side brake pad (4) and applying the tensile force to the application-side brake pad (3).

11. The vehicle disc brake of claim 10, wherein
the force-transferring relationship between the pad-retaining clip (10) and the application-side of the brake caliper (6) is the result of insertion of an application-side end (10b) of the pad-retaining clip (10) into a receiving section of the application side of the brake caliper (6).

12. The vehicle disc brake of claim 11, further comprising:
a pad-retaining clip lifting device configured to cooperate with the application-side of the brake caliper (6) and the application-side end (10b) of the pad-retaining clip (10) to bias the pad-retaining clip end (10b) radially away from the brake disc rotation axis (2a).

13. The vehicle disc brake of claim 12, wherein
the pad-retaining clip lifting device is at least one of a fastener configured to engage the application-side end (10b) of the pad-retaining clip (10) and a fastener arrangement configured to capture the application-side end (10b) of the pad-retaining clip (10).

14. The vehicle disc brake of claim 1, wherein
the pad-retaining clip (10, 10', 10") is a generally planar bar having a back-side end (10a) configured to cooperate with a fastener to couple the pad-retaining clip back-side end (10a) to the back-side of the brake caliper (6) .

15. The vehicle disc brake of claim 14, wherein
the application-side pad-retaining clip receiving section includes a ramp surface at a radially-inner region of the receiving section that tapers radially outward away from the brake disc (2) such that as the pad-retaining clip (10, 10', 10") is inserted into the receiving section the application-side end (10b) of the pad-retaining clip (10, 10', 10") is urged radially away from the brake disc rotation axis (2a).

16. The vehicle disc brake of claim 1 or 4, wherein
the pad-retaining clip (10) is a cam bar having at least one cam surface (10k) arranged to press radially outward on a lower surface of the tensioning element when the cam bar is rotated from an initial insertion position to an operating position.

17. The vehicle disc brake of claim 16, wherein
the at least one cam surface (10k) includes an application-side end cam surface and a back-side end cam surface circumferentially opposite the application-side end cam surface, such that when the cam bar is rotated from the initial insertion position to the operating position the application-side end cam surface presses radially outward on a lower surface of the tensioning element and the back-side end cam surface presses radially inward on an upper surface of the compression element.

18. The vehicle disc brake of claim 16, wherein
the cam bar includes a surface feature on a side of the cam bar that is in contact with the lower surface of the application-side tensioning element when the cam bar is in an installed position, the cam bar surface feature being configured to resist rotation of the cam bar out of the installed position.

19. The vehicle disc brake of claim 1, wherein
the pad-retaining clip (10) includes a plurality of bars (10p, 10q), the plurality of bars (10p, 10q) including at least one lower bar (10q) extending from the back-side of the brake caliper (6) into the brake caliper application-side receiving section, and at least one upper bar (10p) extending from the back-side of the brake caliper (6), under the application-side tensioning element and to a region adjacent to the brake caliper application-side receiving section, and
the upper bar (10p) includes at least one bend in a middle portion of the upper bar (10p) arranged such that during installation on the brake caliper (6) the upper bar (10p) is insertable between an upper surface of the application-side brake pad (3) and the lower surface of the application-side tensioning element and following insertion an application-side end of the upper bar (10p) biases the application-side tensioning element radially outward as a back-side end of the upper bar (10p) is drawn radially inward toward the back side of the brake caliper (6).

20. The vehicle disc brake of claim 1, wherein
the pad-retaining clip (10) includes a rest section (10h) on a radially inner surface in a region radially outward of the application-side brake pad (3), and
the application-side tensioning element is supported on, and biased radially outward, by the pad-retaining clip rest section (10h).

21. The vehicle disc brake of claim 10, wherein
the guide length of the guide device extends between a first axial location at which the compressive force is applied to the back-side brake pad (4) and a second axial location at which the tensile force is applied to the application-side brake pad (3).

22. The vehicle disc brake of claim 3, wherein
the guide device includes the back-side compression element.

23. A method of increasing a guide distance of a sliding brake caliper (6) of a vehicle disc brake (1) for guiding the brake caliper (6) with respect to a brake carrier (5) according to one of the preceding claims, comprising the acts of:
installing an application-side brake pad (3) into an application side brake pad slot of the brake pad carrier (5) configured to support the application-side brake pad (3) and the sliding caliper (6) thereon;
installing a back-side brake pad (4) into a back-side brake pad slot of the brake carrier (5);
installing a pad-retaining clip (10, 10', 10") onto the sliding caliper (6) over the brake pads (3, 4), wherein the installing includes
locating an application-side end of a pad-retaining clip (10, 10', 10") at an application-side of the sliding caliper (6), and
securing a back-side end of the pad-retaining clip (10, 10', 10") on a back side of the sliding caliper (6),
wherein the pad-retaining clip (10, 10', 10") is configured to cooperate with an application-side tensioning element and a back-side compression element such that after the pad-retaining clip installing step
a tensile force is applied to the application-side brake pad (3) in a direction radially away from a rotation axis (2a) of a brake disc (2) of the disc brake (1) and a compressive force is applied to the back-side brake pad (4) in a direction radially toward the brake disc rotation axis (2a), and
the application-side end of the pad-retaining clip (10, 10', 10") applies a support force to the sliding caliper (6) radially away from the brake disc rotation axis (2a).

24. The method of claim 23, wherein
the act of installing the pad-retaining clip (10, 10', 10") includes
inserting the application-side end of the pad-retaining clip (10, 10', 10") between a lower surface of the application-side tensioning element and an upper surface of the application-side brake pad (3) and into a receiving section of the application-side of the sliding caliper (6),
pressing the back-side end of the pad-retaining clip (10, 10', 10") radially inward toward the back-side of the sliding caliper (6) in a manner that applies the tensile force to the application-side brake pad (3) via the application-side tensioning element and applies the compressive force to the back-side brake pad (4) via the back-side compression element, and
securing the back-side end of the pad-retaining clip (10, 10', 10") on the back-side of the sliding caliper (6).

25. The method of claim 24, wherein
the application-side tensioning element and the back-side compression element are coupled to their respective brake pads (3, 4) prior to brake pad installing acts.

## Patentansprüche

1. Scheibenbremse (1) für ein Fahrzeug, aufweisend:
eine Bremsscheibe (2) mit einer Bremsscheiben-Drehachse (2a);
einen Bremssattel (6) mit einer Zuspannseite und einer Rückseite, zum Überspannen der Bremsscheibe (2) ausgelegt;
einen zuspannseitigen Bremsbelag (3) und einen rückseitigen Bremsbelag (4) mit jeweiligen Bremsbelag-Rückenplatten (3a, 3b);
einen zum Überspannen der Bremsscheibe (2) ausgelegten Bremsträger (5), der zur Stützung des Bremssattels (6) in axial verschiebbarer Art und Weise auf einer parallel zur Bremsscheiben-Drehachse (2a) verlaufenden Achse ausgelegt ist und in zuspannseitigen und rückseitigen Bremsbelagschächten Konturen aufweist, wobei die Konturen des Bremsträgermittels zum Zusammenwirken mit formschlüssigen entsprechenden Merkmalen der zuspannseitigen und rückseitigen Bremsbeläge (3, 4) ausgelegt sind, um den zuspannseitigen Bremsbelag (3) gegen Radialbewegungen von der Bremsscheiben-Drehachse (2a) weg und den rückseitigen Bremsbelag (4) gegen Radialbewegungen in Richtung der Bremsscheiben-Drehachse (2a) zu behindern,
wobei der Bremssattel (6) von mindestens zwei Tragstreben (7a, 8a) auf dem Bremsträger (5) abgestützt wird, die das Gleiten des Bremssattels (6) relativ zum Bremsträger (5) in einer parallel zur Bremsscheiben-Drehachse (2a) verlaufenden Richtung zulassen;
Belaghaltemittel, die zum lösbaren Halt am Bremssattel (6) ausgelegt sind und die Bremsbeläge (3, 4) überspannen;
ein zuspannseitiges Spannmittel, das zum Aufbringen einer Zugkraft auf den zuspannseitigen Bremsbelag (3) ausgelegt ist; und
wobei
das Belaghaltemittel auf der Rückseite des Bremssattels (6) gehalten wird und in einem kraftübertragenden Verhältnis zur Zuspannseite des Bremssattels (6) steht,
**gekennzeichnet durch**
ein rückseitiges Druckmittel, das zum Aufbringen einer Zugkraft auf den rückseitigen Bremsbelag (4) ausgelegt ist,
wobei das Belaghaltemittel, das Bremsträgermittel, die Bremsbeläge (3, 4) und das zuspannseitige Spannmittel und das rückseitige Druckmittel eine Führungsvorrichtung bilden, die so angeordnet ist, dass das Belaghaltemittel mit dem zuspannseitigen Spannmittel zusammenwirkt, um die Zugkraft auf den zuspannseitigen Bremsbelag (3) in einer Richtung radial von der Bremsscheiben-Drehachse (2a) weg aufzubringen, und mit dem rückseitigen Druckmittel zusammenwirkt, um die Druckkraft auf den rückseitigen Bremsbelag (4) einer Richtung radial auf die Bremsscheiben-Drehachse (2a) hin aufzubringen.

2. Fahrzeugscheibenbremse nach Anspruch 1, wobei
das Belaghaltemittel eine Belaghalteklammer (10, 10', 10") ist.

3. Fahrzeugscheibenbremse nach Anspruch 2, wobei
die Belaghalteklammer (10, 10', 10") die Druckkraft über das rückseitige Druckelement auf die rückseitige Bremsbelag-Rückenplatte (4a) aufbringt.

4. Fahrzeugscheibenbremse nach Anspruch 3, wobei
das zuspannseitige Spannelement und das rückseitige Druckelement Federn (11, 12) sind, die radial über einer oberen Oberfläche der jeweiligen zuspannseitigen und rückseitigen Bremsbeläge (3, 4) angeordnet sind.

5. Fahrzeugscheibenbremse nach Anspruch 4, wobei
die Federn (11, 12) an die jeweiligen Bremsbelag-Rückenplatten (3a, 4a) gekoppelt sind, und
die Belaghalteklammer (10) über der rückseitigen Feder (12) und unter der zuspannseitigen Feder (11) verläuft.

6. Fahrzeugscheibenbremse nach Anspruch 4, wobei
die zuspannseitige Feder (11) auf dem Bremssattel (5) radial oberhalb des zuspannseitigen Bremsbelags (3) und mit axialem Abstand davon abgestützt ist,
die Belaghalteklammer (10', 10") über der rückseitigen Feder (12) und der zuspannseitigen Feder (11) verläuft, und die Belaghalteklammer (10', 10") so an die obere Oberfläche des zuspannseitigen Bremsbelags (3) gekoppelt ist, dass die zuspannseitige Feder (11) die Zugkraft auf den zuspannseitigen Bremsbelag (3) über die Belaghalteklammer (10', 10") aufbringt.

7. Fahrzeugscheibenbremse nach Anspruch 6, wobei
die Belaghalteklammer (10') durch ein in einem Schlitz (10g) der Belaghalteklammer (10') angeordnetes Befestigungselement an die obere Oberfläche des zuspannseitigen Bremsbelags (3) gekoppelt ist, und
die Zugkraft über das Befestigungselement auf den zuspannseitigen Bremsbelag aufgebracht wird.

8. Fahrzeugscheibenbremse nach Anspruch 7, wobei
der Schlitz (10g) der Belaghalteklammer mindestens so lang ist wie die Gesamtdicke eines zuspannseitigen Bremsbelag-Reibmaterials, eines rückseitigen Bremsbelag-Reibmaterials und eines voraussichtlichen Scheibenverschleißes, so dass eine Relativbewegung zwischen der Belaghalteklammer (10') und dem Befestigungselement infolge einer axialen Verschiebung des Schiebesattels (6) ohne axiale Blockierung der Belaghalteklammer (10') gegen das Befestigungselement aufgenommen wird.

9. Fahrzeugscheibenbremse nach Anspruch 4, wobei
die Federn (11, 12) an die jeweiligen Bremsbelag-Rückenplatten (3a, 4a) von Halteeinrichtungen auf den oberen Oberflächen der jeweiligen Bremsbelag-Rückenplatten (3a, 4a) gekoppelt sind, die zum Eingriff in und zum Halten von entsprechenden Oberflächen an den Enden einer jeden Feder (11, 12) ausgelegt sind.

10. Fahrzeugscheibenbremse nach Anspruch 1 oder 9, wobei
die Führungsvorrichtung auf den Bremssattel (6) eine Stützkraft radial von der Bremsscheiben-Drehachse (2a) weg aufbringt, und
die Stützkraft durch das Zusammenwirken der die Druckkraft auf den rückseitigen Bremsbelag (4) aufbringenden und die Zugkraft auf den zuspannseitigen Bremsbelag (3) aufbringenden Belaghalteklammer (10) über eine Führungslänge erzeugt wird, die sich von der rückseitigen Bremsbelag-Rückenplatte (4a) in Richtung der Zuspannseite des Bremssattels (6) erstreckt.

11. Fahrzeugscheibenbremse nach Anspruch 10, wobei
das kraftübertragende Verhältnis zwischen der Belaghalteklammer (10) und dem Bremssattel (6) das Ergebnis des Einführens eines zuspannseitigen Endes (10b) der Belaghalteklammer (10) in einen Aufnahmeabschnitt der Zuspannseite des Bremssattels (6) ist.

12. Fahrzeugscheibenbremse nach Anspruch 11, weiter aufweisend:
eine Belaghalteklammer-Hebevorrichtung, die zwecks Vorspannen des Belaghalteklammerendes (10b) radial von der Bremsscheiben-Drehachse (2a) weg zum Zusammenwirken mit der Zuspannseite des Bremssattels (6) und dem zuspannseitigen Ende (10b) der Belaghalteklammer (10) ausgelegt ist.

13. Fahrzeugscheibenbremse nach Anspruch 12, wobei
die Belaghalteklammer-Hebevorrichtung ein zum Eingriff in das zuspannseitige Ende (10b) der Belaghalteklammer (10) ausgelegtes Befestigungselement und/oder eine zum Ergreifen des zuspannseitigen Endes (10b) der Belaghalteklammer (10) ausgelegte Befestigungsanordnung ist.

14. Fahrzeugscheibenbremse nach Anspruch 1, wobei
die Belaghalteklammer (10, 10', 10") eine im Allgemeinen ebener Stange mit einem rückseitigen Ende (10a) ist, das zwecks Koppeln des rückseitigen Endes (10a) der Belaghalteklammer an die Rückseite des Bremssattels (6) zum Zusammenwirken mit einem Befestigungselement ausgelegt ist.

15. Fahrzeugscheibenbremse nach Anspruch 14, wobei
der Aufnahmeabschnitt der zuspannseitigen Belaghalteklammer in einem radial inneren Bereich des Aufnahmeabschnitts eine Rampenfläche umfasst, die sich radial nach außen von der Bremsscheibe (2) weg verjüngt, so dass beim Einführen der Belaghalteklammer (10, 10', 10") in den Aufnahmeabschnitt das zuspannseitige Ende (10b) der Belaghalteklammer (10, 10', 10") radial von der Bremsscheiben-Drehachse (2a) weg gedrängt wird.

16. Fahrzeugscheibenbremse nach Anspruch 1 oder 4, wobei
die Belaghalteklammer (10) eine Nockenstange mit mindestens einer Nockenfläche (10k) ist, die zum radial nach außen gerichteten Drücken auf eine untere Oberfläche des Spannelements ausgelegt ist, wenn die Nockenstange aus einer anfänglichen Einführstellung in eine Betriebsstellung gedreht wird.

17. Fahrzeugscheibenbremse nach Anspruch 16, wobei
die mindestens eine Nockenfläche (10k) eine Nockenfläche am zuspannseitigen Ende und eine in Umfangsrichtung der Nockenfläche am zuspannseitigen Ende gegenüberliegende Nockenfläche am rückseitigen Ende umfasst, so dass beim Drehen der Nockenstange aus der anfänglichen Einführstellung in die Betriebsstellung die Nockenfläche am zuspannseitigen Ende radial nach außen auf eine untere Oberfläche des Spannelements drückt und die Nockenfläche am rückseitigen Ende radial nach innen auf eine obere Oberfläche des Druckelements drückt.

18. Fahrzeugscheibenbremse nach Anspruch 16, wobei
die Nockenstange auf einer Seite der Nockenstange ein Oberflächenmerkmal umfasst, das in einer Einbaulage der Nockenstange mit der unteren Oberfläche des zuspannseitigen Spannelements in Kontakt ist, wobei das Oberflächenmerkmal der Nockenstange dem Drehen der Nockenstange aus der Einbaulage entgegenwirkt.

19. Fahrzeugscheibenbremse nach Anspruch 1, wobei
die Belaghalteklammer (10) eine Vielzahl von Stangen (10p, 10q) umfasst, wobei die Vielzahl von Stangen (10p, 10q) mindestens eine untere Stange (10q), die sich von der Rückseite des Bremssattels (6) in den zuspannseitigen Aufnahmeabschnitt des Bremssattels erstreckt, und mindestens eine obere Stange (10p), die sich von der Rückseite des Bremssattels (6) unter dem zuspannseitigen Spannelement zu einem Bereich neben dem zuspannseitigen Aufnahmeabschnitt des Bremssattels erstreckt, umfasst, und
die obere Stange (10p) mindestens eine Biegung in einem mittleren Teil der oberen Stange (10p) umfasst, die so angeordnet ist, dass beim Einbau des Bremssattels (6) die obere Stange (10p) zwischen einer oberen Oberfläche des zuspannseitigen Bremsbelags (3) und der unteren Oberfläche des zuspannseitigen Spannelements eingeführt werden kann und nach dem Einführen ein zuspannseitiges Ende der oberen Stange (10p) das zuspannseitige Spannelement radial nach außen vorspannt, während ein rückseitiges Ende der oberen Stange (10p) radial nach innen in Richtung der Rückseite des Bremssattels (6) gezogen wird.

20. Fahrzeugscheibenbremse nach Anspruch 1, wobei
die Belaghalteklammer (10) einen auf einer radial inneren Oberfläche in einem radial außerhalb des zuspannseitigen Bremsbelags (3) angeordneten Auflageanschnitt (10h) umfasst, und
das zuspannseitige Spannelement auf dem Auflageanschnitt (10h) der Belaghalteklammer abgestützt und radial anch außen vorgespannt wird.

21. Fahrzeugscheibenbremse nach Anspruch 10, wobei
die Führungslänge der Führungsvorrichtung zwischen einer ersten Axialstelle, wo die Druckkraft auf den rückseitigen Bremsbelag (4) aufgebracht wird, und einer zweiten Axialstelle, wo die Zugkraft auf den zuspannseitigen Bremsbelag (3) aufgebracht wird, verläuft.

22. Fahrzeugscheibenbremse nach Anspruch 3 wobei
die Führungsvorrichtung ein rückseitiges Druckelement umfasst.

23. Verfahren zur Vergrößerung eines Führungsabstandes eines Schiebesattels (6) einer Fahrzeugscheibenbremse (1) nach einem der vorhergehenden Ansprüche in Bezug auf einen Bremsträger (5), umfassend die folgenden Handlungen:
den Einbau eines zuspannseitigen Bremsbelags (3) in einen zuspannseitigen Bremsbelagschacht des Bremsträgers (5), der zur Abstützung des zuspannseitigen Bremsbelags (3) und des Schiebesattels (6) ausgelegt ist;
den Einbau eines rückseitigen Bremsbelags (4) in einen rückseitigen Bremsbelagschacht des Bremsträgers (5);
die Montage einer Belaghalteklammer (10, 10', 10") auf dem Schiebesattel (6) über den Bremsbelägen (3, 4), wobei die Montage Folgendes umfasst:
das Platzieren eines zuspannseitigen Endes einer Belaghalteklammer (10, 10', 10") auf einer Zuspannseite des Schiebesattels (6), und
das Befestigen eines rückseitigen Endes der Belaghalteklammer (10, 10', 10") auf einer Rückseite des Schiebesattels (6),
wobei die Belaghalteklammer (10, 10', 10") zum Zusammenwirken mit einem zuspannseitigen Spannelement und einem rückseitigen Druckelement auf derartige Weise ausgelegt ist, dass nach dem Schritt der Montage der Belaghalteklammer
eine Zugkraft auf den zuspannseitigen Bremsbelag (3) in einer Richtung radial von einer Drehachse (2a) einer Bremsscheibe (2) der Scheibenbremse (1) weg aufgebracht wird und eine Druckkraft auf den rückseitigen Bremsbelag (4) in einer Richtung radial auf die Bremsscheiben-Drehachse (2a) hin aufgebracht wird, und
die zuspannseitige Belaghalteklammer (10, 10', 10") eine Stützkraft auf den Schiebesattel (6) radial von der Bremsscheiben-Drehachse (2a) weg aufbringt.

24. Verfahren nach Anspruch 23, wobei
die Handlung der Montage der Belaghalteklammer (10, 10', 10") Folgendes umfasst:
das Einführen des zuspannseitigen Endes der Belaghalteklammer (10, 10', 10") zwischen einer unteren Oberfläche des zuspannseitigen Spannelements und einer oberen Oberfläche des zuspannseitigen Bremsbelags (3) und in einen Aufnahmeabschnitt des Schiebesattels (6),
das Drücken des rückseitigen Endes der Belaghalteklammer (10, 10', 10") radial nach innen in Richtung der Rückseite des Schiebesattels (6) auf eine Art und Weise, die die Zugkraft über das zuspannseitige Spannelement auf den zuspannseitigen Bremsbelag (3) aufbringt und die Druckkraft über das rückseitige Druckelement auf den rückseitigen Bremsbelag (4) aufbringt, und
das Befestigen des rückseitigen Endes der Belaghalteklammer (10, 10', 10") auf der Rückseite des Schiebesattels (6).

25. Verfahren nach Anspruch 24, wobei
das zuspannseitige Spannelement und das rückseitige Druckelement vor Bremsbelag-Einbauhandlungen an ihre jeweiligen Bremsbeläge (3, 4) gekoppelt werden.

## Revendications

1. Frein (1) à disque de véhicule, comprenant :
un disque (2) de frein, ayant un axe (2a) de rotation de disque de frein ;
un étrier (6) de frein, ayant un côté d'application et un côté arrière et configuré pour chevaucher le disque (2)de frein ;
une plaquette (3) de frein du côté d'application et une plaquette (4) de frein du côté arrière, ayant des plaques (3a, 3b) arrières respectives de plaquettes de frein ;
un support (5) de frein, configuré pour chevaucher le disque (2) de frein et configuré pour supporter l'étrier (6) de frein d'une manière déplaçable axialement sur un axe parallèle à l'axe (2a) de rotation du disque de frein et ayant des contours en fente de support de plaquettes de frein du côté d'application et du côté arrière, les contours du moyen de support de frein étant configurés pour coopérer avec des caractéristiques complémentaires à complémentarité de forme des plaquettes (3, 4) de frein du côté d'application et du côté arrière pour contraindre la plaquette (3) de frein du côté d'application, en l'empêchant de s'éloigner radialement de l'axe (2a) de rotation du disque de frein, et la plaquette (4) de frein du côté arrière, en l'empêchant d'aller radialement vers l'axe (2a) de rotation du disque de frein,
l'étrier (6) de frein étant supporté sur le support (5) de frein par au moins deux entretoises (7a, 8a) de palier, configurées pour permettre à l'étrier (6) de frein de glisser par rapport au support (5) de frein suivant une direction parallèle à l'axe (2a) de rotation du disque de frein ;
un moyen de retenue de plaquette, configuré pour être maintenu de manière détachable sur l'étrier (6) de frein et pour chevaucher les plaquettes (3, 4) de frein ;
un moyen de tension du côté d'application, configuré pour appliquer une force de traction à la plaquette (3) de frein du côté d'application ; et
dans lequel
le moyen de retenue de plaquette est retenu sur le côté arrière de l'étrier (6) de frein et est dans une relation de transfert de force avec le côté d'application de l'étrier (6) de frein,
**caractérisé par**
un moyen de compression du côté arrière, configuré pour appliquer une force de compression à la plaquette (4) de frein du côté arrière,
dans lequel le moyen de retenue de plaquette, le moyen de support de frein, les plaquettes (3, 4) de frein et le moyen de tension du côté d'application et le moyen de compression du côté arrière forment un dispositif de guidage, agencé de manière à ce que le moyen de retenue de plaquette coopère avec le moyen de tension du côté d'application pour appliquer la force de traction à la plaquette (3) de frein du côté d'application dans un sens s'éloignant radialement de l'axe (2a) de rotation du disque de frein et avec le moyen de compression du côté arrière pour appliquer la force de compression à la plaquette (4) de frein du côté arrière dans un sens allant radialement vers l'axe (2a) de rotation du disque de frein.

2. Frein (1) à disque de frein de véhicule suivant la revendication 1, dans lequel
le moyen de retenue de plaquette est une attache (10, 10', 10") de retenue de plaquette.

3. Frein à disque de véhicule suivant la revendication 2,
dans lequel l'attache de retenue de plaquette applique (10, 10', 10") la force de compression à la plaque (4a) arrière de plaquette de frein du côté arrière par l'intermédiaire de l'élément de compression du côté arrière.

4. Frein à disque de véhicule suivant la revendication 3, dans lequel
l'élément de tension du côté d'application et l'élément de compression du côté arrière sont des ressorts (11, 12), disposés radialement au-dessus d'une surface supérieure de leur plaquette (3, 4) de frein respective du côté d'application et du côté arrière.

5. Frein à disque de véhicule suivant la revendication 4, dans lequel
les ressorts (11, 12) sont associés à leurs plaques (3a, 4a) respectives arrière de plaquettes de frein, et l'attache (10) de retenue de plaquette passe sur le ressort (12) du côté arrière et sous le ressort (11) du côté d'application.

6. Frein à disque de véhicule suivant la revendication 4, dans lequel
le ressort (11) du côté d'application est supporté sur l'étrier (5) de frein, radialement au-dessus et décalé axialement de la plaquette (3) de frein du côté d'application,
l'attache (10', 10") de retenue de plaquette passe sur le ressort (12) du côté arrière et sur le ressort (11) du côté d'application et l'attache (10', 10") de retenue de plaquette est associée à la surface supérieure de la plaquette (3) de frein du côté d'application, de manière à ce que le ressort (11) du côté d'application applique la force de traction à la plaquette (3) de frein du côté d'application, par l'intermédiaire de l'attache (10', 10") de retenue de plaquette.

7. Frein à disque de véhicule suivant la revendication 6, dans lequel
l'attache (10') de retenue de plaquette est associée à la surface supérieure de la plaquette (3) de frein du côté d'application par une fixation placée dans une fente (10g) de l'attache (10') de retenue de plaquette, et
la force de traction est appliquée à la plaquette de frein du côté d'application par l'intermédiaire de la fixation .

8. Frein à disque de véhicule suivant la revendication 7, dans lequel
la fente (10g) de l'attache de retenue de plaquette est au moins aussi longue que l'épaisseur combinée d'un matériau de friction de plaquette de frein du côté d'application, d'un matériau de friction de plaquette de frein du côté arrière et de l'usure de rotor anticipée, de manière à s'accommoder du déplacement relatif entre l'attache (10') de retenue de plaquette et la fixation en raison d'un déplacement axial de l'étrier (6) de frein coulissant, sans blocage axial de l'attache (10') de retenue de plaquette sur la fixation.

9. Frein à disque de véhicule suivant la revendication 4, dans lequel
les ressorts (11, 12) sont associés à leurs plaques (3a, 4a) arrières respectives de plaquettes de frein par des caractéristiques de retenue sur les surfaces supérieures des plaques (3a, 4a) arrières respectives, configurées pour se conjuguer à des surfaces correspondantes aux extrémités de chaque ressort (11, 12) et les retenir.

10. Frein à disque de véhicule suivant la revendication 1 ou 9, dans lequel
le dispositif de guidage applique une force de support à l'étrier (6) de frein, l'éloignant radialement de l'axe (2a) de rotation du disque de frein, et
la force de support est produite sur une longueur de guidage s'étendant de la plaque (4a) arrière de plaquette de frein du côté arrière au côté d'application de l'étrier (6) de frein, par l'interaction de l'attache (10) de retenue de plaquette appliquant la force de compression à la plaquette (4) de frein du côté arrière et appliquant la force de traction à la plaquette (3) de frein du côté d'application.

11. Frein à disque de véhicule suivant la revendication 10, dans lequel
la relation de transfert de force entre l'attache (10) de retenue de plaquette et le côté d'application de l'étrier (6) de frein est le résultat de l'insertion d'une extrémité (10b), du côté de l'application, de l'attache (10) de retenue de plaquette dans une partie de réception du côté d'application de l'étrier (6) de frein.

12. Frein à disque de véhicule suivant la revendication 11, comprenant, en outre :
un dispositif de levage de l'attache de retenue de plaquette, configuré pour coopérer avec le côté d'application de l'étrier (6) de frein et l'extrémité (10b) du côté d'application de l'attache (10) de retenue de plaquette pour éloigner radialement l'extrémité (10b) de l'attache de retenue de plaquette de l'axe (2a) de rotation du disque de frein.

13. Frein à disque de véhicule suivant la revendication 12, dans lequel
le dispositif de levage de l'attache de retenue de plaquette est au moins l'un d'une fixation configurée pour se conjuguer avec l'extrémité (10b) du côté d'application de l'attache (10) de retenue de plaquette et un agencement de fixation configuré pour prendre l'extrémité (10b), du côté d'application, de l'attache (10) de retenue de plaquette.

14. Frein à disque de véhicule suivant la revendication 1, dans lequel
l'attache (10, 10', 10") de retenue de plaquette est une barre d'une manière générale plane, ayant une extrémité (10a) du côté arrière, configurée pour coopérer avec une fixation pour associer l'extrémité (10a) du côté arrière de l'attache de retenue de plaquette au côté arrière de l'étrier (6) de frein.

15. Frein à disque de véhicule suivant la revendication 14, dans lequel
la partie recevant l'attache de retenue de plaquette du côté d'application a une surface en rampe, à une région intérieure radialement de la partie de réception, qui s'éloigne coniquement vers l'extérieur radialement du disque (2) de frein, de manière à ce que, alors que l'attache (10, 10', 10") de retenue de plaquette est insérée dans la partie de réception, l'extrémité (10b), du côté d'application, de l'attache (10, 10', 10") de retenue de plaquette tende à s'éloigner radialement de l'axe (2a) de rotation du disque de frein.

16. Frein à disque de véhicule suivant la revendication 1 ou 4, dans lequel
l'attache (10) de retenue de plaquette est une barre à came ayant au moins une surface (10k) de came, disposée pour presser radialement vers l'extérieur sur une surface inférieure de l'élément de tension, lorsque la barre à came tourne d'une position initiale d'insertion à une position de fonctionnement.

17. Frein à disque de véhicule suivant la revendication 16, dans lequel
la au moins une surface (10k) de came a une surface de came d'extrémité du côté d'application et une surface de came d'extémité du côté arrière, opposée circonférentiellement à la surface de came d'extrémité du côté d'application, de manière à ce que, lorsque la barre à came tourne de la position initiale d'insertion à la position de fonctionnement, la surface de came d'extrémité du côté d'application presse radialement vers l'extérieur sur la surface inférieure de l'élément de tension et la surface de came d'extrémité du côté arrière presse radialement vers l'intérieur sur la surface supérieure de l'élément de compression.

18. Frein à disque de véhicule suivant la revendication 16, dans lequel
la barre à came a une caractéristique de surface sur un côté de la barre à came, qui est en contact avec la surface inférieure de l'élément de tension du côté d'application, lorsque la barre à came est en une position montée, la caractéristique de surface de la barre à came étant configurée pour résister à la rotation de la barre à came hors de la position montée.

19. Frein à disque de véhicule suivant la revendication 1, dans lequel
l'attache (10) de retenue de plaquette comprend une pluralité de barres (10p, 10q), la pluralité de barres (10p, 10q) ayant au moins une barre (10q) inférieure, s'étendant du côté arrière de l'étrier (6) de frein à la partie de réception du côté d'application de l'étrier de frein, et au moins une barre (10p) supérieure, s'étendant du côté arrière de l'étrier (6) de frein, sous l'élément de tension du côté d'application et a une région voisine de la partie de réception du côté d'application de l'étrier de frein, et
la barre (10p) supérieure a au moins une courbure dans une partie médiane de la barre (10p) supérieure, disposée de manière à ce que, pendant le montage sur l'étrier (6) de frein, la barre (10p) supérieure puisse être insérée entre une surface supérieure de la plaquette (3) de frein du côté d'application et la surface inférieure de l'élément de tension du côté d'application et, à la suite de l'insertion, une extrémité, du côté d'application, de la barre (10p) supérieure fait aller radialement l'élément de tension du côté d'application, alors qu'une extrémité du côté arrière de la barre (10p) supérieure est tirée radialement vers l'intérieur vers le côté arrière de l'étrier (6) de frein.

20. Frein à disque de véhicule suivant la revendication 1, dans lequel
l'attache (10) de retenue de plaquette a une partie (10h) de repos sur une surface intérieure radialement dans une région vers l'extérieur radialement de la plaquette (3) de frein du côté d'application, et
l'élément de tension du côté d'application est supporté sur et sollicité vers l'extérieur radialement par la partie (10h) de repos de l'attache de retenue de plaquette.

21. Frein à disque de véhicule suivant la revendication 10, dans lequel
la longueur de guidage du dispositif de guidage s'étend entre un premier emplacement axial où la force de compression est appliquée à la plaquette (4) de frein du côté arrière et un deuxième emplacement axial où la force de traction est appliquée à la plaquette (3) de frein du côté d'application.

22. Frein à disque de véhicule suivant la revendication 3, dans lequel
le dispositif de guidage a l'élément de compression du côté arrière.

23. Procédé d'augmentation d'une distance de guidage d'un étrier (6) de frein coulissant d'un frein (1) à disque de véhicule pour guider l'étrier (6) de frein par rapport à un support (5) de frein suivant l'une des revendications précédentes, comprenant les opérations de :
montage d'une plaquette (3) de frein du côté d'application dans une fente, de plaquette de frein du côté d'application, du support (5) de plaquette de frein, configuré pour y supporter la plaquette (3) de frein du côté d'application et l'étrier (6) coulissant ;
montage d'une plaquette (4) de frein du côté arrière dans une fente de plaquette de frein du côté arrière, du support (5) de frein ;
montage d'une attache (10, 10', 10") de retenue de plaquette sur l'étrier (6) coulissant sur les plaquettes (3, 4) de frein, le montage comprenant
placer une extrémité, du côté d'application, de l'attache (10, 10', 10") de retenue de plaquette à un côté d'application de l'étrier (6) coulissant, et
fixer une extrémité, du côté arrière, de l'attache (10, 10', 10") de retenue de plaquette à un côté arrière de l'étrier (6) coulissant,
dans lequel l'attache (10, 10', 10") de retenue de plaquette est configurée pour coopérer avec un élément de tension du côté d'application et avec un élément de compression du côté arrière, de manière à ce que, après le stade de montage de l'attache de retenue de plaquette,
une force de traction soit appliquée à la plaquette (3) de frein du côté d'application dans un sens l'éloignant radialement de l'axe (2a) de rotation d'un disque (2) de frein du frein (1) à disque et une force de compression soit appliquée à la plaquette (4) de frein du côté arrière dans un sens allant radialement vers l'axe (2a) de rotation du disque de frein, et
l'extrémité du côté d'application de l'attache (10, 10', 10") de retenue de plaquette applique une force de support à l'étrier (6) coulissant, l'éloignant radialement de l'axe (2a) de rotation du disque de frein.

24. Procédé suivant la revendication 23, dans lequel l'opération de montage de l'attache (10, 10', 10") de retenue de plaquette comprend
l'insertion de l'extrémité, du côté d'application, de l'attache (10, 10', 10") de retenue de plaquette entre une surface inférieure de l'élément de tension du côté d'application et une surface supérieure de la plaquette (3) de frein du côté d'application et dans une partie de réception du côté d'application de l'étrier (6) coulissant,
la poussée de l'extrémité, du côté arrière, de l'attache (10, 10', 10") de retenue de plaquette radialement vers l'intérieur vers le côté arrière de l'étrier (6) coulissant d'une manière, qui applique la force de traction à la plaquette (3) de frein du côté d'application, par l'intermédiaire de l'élément de tension du côté d'application et applique la force de compression à la plaquette (4) de frein du côté arrière, par l'intermédiaire de l'élément de compression du côté arrière, et
la fixation de l'extrémité, du côté arrière, de l'attache (10, 10', 10") de retenue de plaquette au côté arrière de l'étrier (6) coulissant.

25. Frein à disque de véhicule suivant la revendication 24, dans lequel
l'élément de tension du côté d'application et l'élément de compression du côté arrière sont associés à leur plaquette (3, 4) de frein respective avant les opérations de montage de plaquette de frein.
